# FASCICULE DE BREVET EUROPEEN

(11) **EP 4 431 548 B1**
(45) Date de publication et mention de la délivrance du brevet: **25.06.2025**
(21) Numéro de dépôt: 24163281.9
(22) Date de dépôt: 13.03.2024
(51) Int. Cl.: C08G 81/02, C08J 5/22, H01M 10/0565, C08F 8/00

(54) **PROCÉDÉ DE PRÉPARATION D'UN POLYMÈRE EN PEIGNE ET SON UTILISATION POUR FORMER UN ÉLECTROLYTE SOLIDE**
VERFAHREN ZUR HERSTELLUNG EINES KAMMPOLYMERS UND DESSEN VERWENDUNG ZUR HERSTELLUNG EINES FESTELEKTROLYTEN
METHOD FOR PREPARING COMB POLYMER AND USE THEREOF FOR FORMING SOLID ELECTROLYTE

(30) Priorité: 14.03.2023 FR 2302362
(43) Date de publication de la demande: 18.09.2024
(73) Titulaire: Commissariat à l'Energie Atomique et aux Energies Alternatives, 75015 Paris (FR)
(72) Inventeur: LANDA, Matthieu, 38054 Grenoble Cedex 09 (FR); PICARD, Lionel, 38054 Grenoble Cedex 09 (FR); BERNARD, Laurent, 38054 Grenoble Cedex 09 (FR)
(74) Mandataire: Ipsilon NNY

(56) Documents cités:
- EP-A1- 3 865 533
- CHRISTINA OTT ET AL: "Post-modification of poly(pentafluorostyrene): a versatile "click"; method to create well-defined multifunctional graft copolymers", CHEMICAL COMMUNICATIONS, no. 30, 1 January 2008 (2008-01-01), UK, pages 3516, XP055739549, ISSN: 1359-7345, DOI: 10.1039/b807152g
- TAO CAI ET AL: "Preparation of jellyfish-shaped amphiphilic block-graft copolymers consisting of a poly(epsilon-caprolactone)-block-poly(pentafluorostyrene) ring and poly(ethylene glycol) lateral brushes", POLYMER CHEMISTRY, vol. 3, no. 4, 1 January 2012 (2012-01-01), Cambridge, pages 1061, XP055739554, ISSN: 1759-9954, DOI: 10.1039/c2py00609j
- HYEONGRAE CHO ET AL: "Novel Anion Exchange Membrane Based on Poly(Pentafluorostyrene) Substituted with Mercaptotetrazole Pendant Groups and Its Blend with Polybenzimidazole for Vanadium Redox Flow Battery Applications", POLYMERS, vol. 12, no. 4, 1 January 2020 (2020-01-01), CH, pages 915, XP055739536, ISSN: 2073-4360, DOI: 10.3390/polym12040915

## Description

### Domaine technique

La présente invention se rapporte à une nouvelle méthode de préparation d'un polymère en peigne, et au polymère en peigne ainsi obtenu.

De tels polymères en peigne peuvent être mis en œuvre, en combinaison avec des sels de métaux alcalins ou alcalino-terreux, pour former des électrolytes solides, qui trouvent des applications particulièrement avantageuses dans différents systèmes ou dispositifs électrochimiques, notamment dans des batteries rechargeables, par exemple des batteries au lithium.

### Technique antérieure

D'une manière classique, le principe de fonctionnement d'un générateur électrochimique repose sur l'insertion et le retrait, aussi appelé « désinsertion », d'un ion de métal alcalin ou d'un proton, dans et depuis l'électrode positive, et le dépôt ou l'extraction de cet ion, sur et de l'électrode négative.

Les principaux systèmes utilisent le cation lithium comme espèce ionique de transport. Dans le cas d'un accumulateur au lithium par exemple, le cation lithium extrait de l'électrode positive lors de la charge de la batterie vient se déposer sur l'électrode négative, et inversement, il s'extrait de l'électrode négative pour s'intercaler dans l'électrode positive lors de la décharge.

Le transport du proton ou du cation alcalin ou alcalino-terreux, en particulier du cation lithium, entre l'électrode positive et l'électrode négative, est assuré par un électrolyte conducteur ionique.

La formulation de l'électrolyte utilisé revêt un caractère essentiel pour les performances du système électrochimique, en particulier lorsque celui-ci est utilisé à des températures très basses ou très élevées. La conductivité ionique de l'électrolyte conditionne notamment l'efficacité du système électrochimique étant donné qu'elle intervient sur la mobilité des ions entre les électrodes positive et négative. D'autres paramètres interviennent également dans le choix de l'électrolyte mis en œuvre. Il s'agit notamment de sa stabilité thermique, chimique ou électrochimique au sein du système électrochimique, ainsi que des critères économiques, de sécurité et de respect de l'environnement, incluant notamment la toxicité de l'électrolyte.

Les électrolytes conventionnels sont classiquement issus de la dissolution d'un sel de cation métallique dans un milieu organique ou aqueux, et nécessitent pour l'élaboration d'un système électrochimique complet, un séparateur pour assurer une isolation entre l'anode et la cathode.

A ce titre, les électrolytes à l'état solide (dits encore « SSE » pour l'acronyme anglo-saxon « Solid-State Electrolyte ») représentent l'une des alternatives les plus prometteuses aux électrolytes conventionnels. Les batteries au lithium, mettant en œuvre des électrolytes à l'état solide, sont considérées comme la prochaine génération des dispositifs de stockage d'énergie, permettant d'atteindre des densités d'énergie plus élevées et une sécurité accrue du fait de l'absence de solvant. Les SSEs peuvent être classés en trois catégories : les électrolytes solides inorganiques (dits encore « ISEs » pour « Inorganic Solid Electrolytes »), les électrolytes solides polymériques (dits encore « SPEs » pour « Solid Polymer Electrolytes ») et les électrolytes solides hybrides (dits encore « HSEs » pour « Hybrid Solid Electrolytes »). Une attention particulière est portée aux SPEs et aux HSEs, électrolytes solides à base de polymères, en raison de la flexibilité élevée de ces électrolytes, qui autorise leur mise en œuvre pour l'élaboration de batteries d'épaisseur réduite et présentant une plus grande flexibilité.

A l'image d'un électrolyte liquide, ces électrolytes solides à base de polymères sont composés d'un polymère hôte dans lequel est dissous un sel de métal alcalin ou alcalino-terreux. Historiquement, les SPEs et HSEs les plus répandus, notamment pour des dispositifs électrochimiques au lithium, sont à base de polyéthers, et plus particulièrement à base de poly(éthylène glycol), également appelé poly(oxyéthylène) (POE) [1]. Toutefois, l'utilisation de ce type de polymères présente plusieurs limites. En particulier, le POE est largement cristallin (la cristallinité du POE pur est de l'ordre de 75-80 % à température ambiante), ce qui conduit à une perte de conductivité ionique de l'électrolyte solide à base de POE en dessous de sa température de fusion (environ 60-65°C). La stabilité mécanique du POE est également insuffisante aux températures élevées (supérieures à 60 °C) où il conduit bien les ions. Qui plus est, le POE présente une faible fenêtre de stabilité électrochimique (< 3,9 V vs. Li/Li⁺), ce qui rend ce type de SPEs adapté uniquement pour leur mise en œuvre avec des cathodes à bas potentiel, comme par exemple de type LiFePO₄ (LFP).

De fait, des polymères alternatifs ont été développés ces dernières années, et notamment des polycarbonates et plus particulièrement le poly(triméthylène carbonate) (PTMC). Le PTMC permet d'obtenir des performances améliorées, comparativement au POE, en termes de stabilité électrochimique (jusqu'à 5,0 V vs. Li/Li⁺), du nombre de transport ionique plus élevé (t₊≈0,8) ou encore de sa stabilité thermique. Toutefois, ces polymères présentent des performances mécaniques limitées.

Afin de pallier ces limitations, il a été proposé de synthétiser des copolymères [2-4], comportant un bloc rigide, apportant des propriétés mécaniques adaptées à leur usage en tant qu'électrolyte, et un bloc conducteur ionique. Ces copolymères peuvent être de type copolymères à blocs formés de différents polymères ou de type copolymères greffés, dits encore polymères à peigne, composés d'une chaine principale polymérique, sur laquelle sont greffées des chaines polymériques pendantes.

Récemment, il a été proposé la synthèse de polymères en peigne comprenant une chaîne principale poly(2,3,4,5,6-pentafluorostyrène) (PPFS) porteuse de chaines latérales poly(oxyde d'éthylène) ou poly(triméthylène carbonate), greffées en *para* des groupes pentafluorophényle de la chaîne principale par l'intermédiaire de liaisons éther [5-6].

Un autre exemple de polymère en peigne comprenant une chaîne principale formée à partir de monomères 1-éthényl- et/ou 1-allyl- 2,3,4,5,6-pentafluorobenzène portant des chaînes latérales est décrit dans l'article de Ott et al., Chem. Comm., 30: 3516-3518 (2008). Des polymères formés à partir de monomères 1-éthényl- et/ou 1-allyl- 2,3,4,5,6-pentafluorobenzène sont également décrits dans les articles de Cai et al., Polymer Chemistry, 3: 1061-1068 (2012), et de Cho et al., Polymers, 12 : 1-14 (2020).

Ces polymères en peigne peuvent en particulier être formés par greffage des polymères destinés à former les chaînes polymériques latérales du polymère en peigne directement sur le polymère de type PPFS. Le greffage fait intervenir la mise en présence du polymère de type PPFS avec une base forte, notamment avec l'hydrure de sodium (NaH), l'hydroxyde de sodium (NaOH) ou l'hydroxyde de potassium (KOH), pour opérer la réaction de substitution dite de « para click » entre l'atome de fluor en position *para* des groupes pentafluorophényle des unités monomériques de la chaîne de type PPFS, et une fonction hydroxyle portée par le polymère à greffer, par exemple un PTMC.

Or, les inventeurs ont constaté que l'utilisation de ces bases fortes pour former les chaînes latérales du polymère peigne était de nature à entraîner des réactions secondaires de trans-carbonation ou trans-estérification, entrainant une réorganisation des chaînes de type PTMC, avec pour conséquence l'annihilation du contrôle des extrémités des chaînes du polymère à greffer, par exemple du PTMC (élimination de la fonction terminale hydroxyle portée par le polymère à greffer), et l'augmentation de la polydispersité des chaînes .

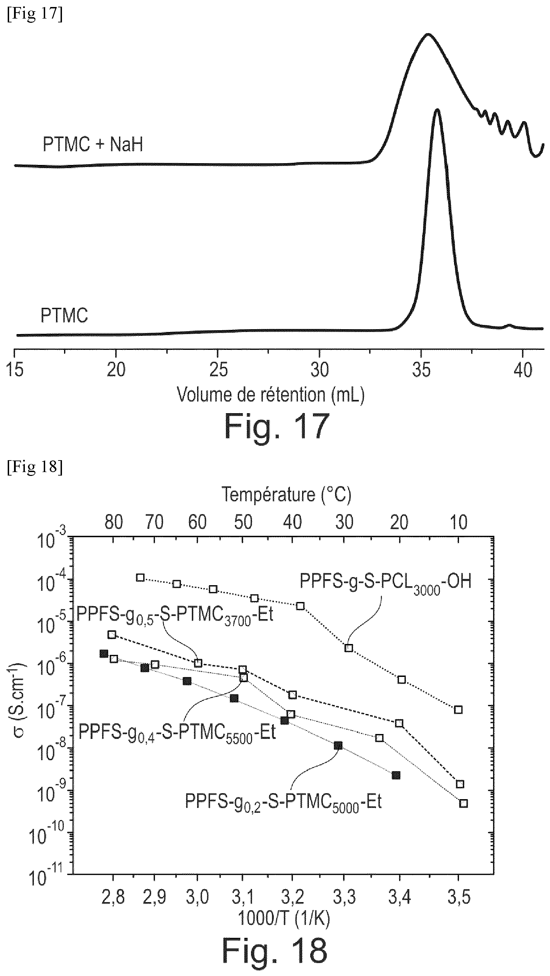

Une analyse par chromatographie d'exclusion stérique (CES) permet de mettre en évidence l'incidence de la présence d'une base forte sur le comportement du PTMC à la température de réaction souhaitée pour le greffage (65°C) (Figure 17).

Ces réactions secondaires en présence d'une base forte affectent ainsi la reproductibilité de la synthèse du polymère peigne, une perte de contrôle du taux de greffage et de la polydispersité des chaînes latérales greffées, et a pour conséquence de rendre difficile l'optimisation des polymères en peigne formés en vue d'accroître les performances des électrolytes solides préparés à partir de ces polymères.

Il demeure ainsi un besoin de proposer une nouvelle voie de synthèse de polymères conducteurs ioniques en peigne, permettant d'améliorer le contrôle des caractéristiques des polymères obtenus, en particulier en termes de taux de greffage, de longueur de chaîne et de polydispersité des chaînes pendantes, et ainsi d'optimiser les performances des électrolytes solides formés à base de ces polymères.

La présente invention vise précisément à répondre à ce besoin.

### Résumé de l'invention

L'invention concerne ainsi, selon un premier de ses aspects, un procédé de préparation d'un polymère en peigne comprenant au moins les étapes consistant en :
(i) disposer d'un polymère formé à partir de monomères 1-éthényl- et/ou 1-allyl- 2,3,4,5,6-pentafluorobenzène, dit « polymère de type PPFS », destiné à former la chaîne principale du polymère en peigne ;
(ii) disposer d'au moins un polymère, dit « polycarbonate/polyester téléchélique », destiné à former des chaînes latérales dudit polymère en peigne, ledit polymère étant formé à partir d'au moins un monomère cyclique de cinq à huit chaînons choisi parmi les lactones et les carbonates cycliques, et présentant au moins une fonction hydroxyle à l'une de ses extrémités, et une fonction thiol libre, en particulier à l'autre de ses extrémités ; et
(iii) procéder au greffage dudit polycarbonate/polyester téléchélique, en position *para* d'une partie des groupements pentafluorophényle des unités monomériques du polymère de type PPFS, ledit greffage faisant intervenir une réaction de substitution nucléophile entre la fonction thiol portée par le polycarbonate/polyester téléchélique et l'atome de fluor en position *para* du groupement pentafluorophényle.

Par « polymère en peigne », également désigné copolymère ramifié ou branché, on entend un polymère qui présente une chaîne principale polymérique linéaire et au moins deux chaînes latérales ou chaînes pendantes fixées à la chaîne principale en des points situés entre les deux extrémités de la chaîne principale, appelés points de ramification ou points de branchement. A la différence des polymères linéaires qui comportent des groupements latéraux ou groupes pendants non polymériques, les chaînes latérales des polymères en peigne sont des oligomères, des polymères ou des copolymères.

En particulier, un polymère en peigne est distinct de réseaux de polymères dits hyperbranchés ou hyper-ramifiés. En particulier, les chaînes polymériques latérales portées par la chaîne principale du polymère en peigne selon l'invention ne sont pas elles-mêmes porteuses de chaînes polymériques latérales.

On désignera plus simplement dans la suite du texte sous l'appellation « polymère en peigne » ou « polymère peigne », le polymère en peigne obtenu selon l'invention.

Dans la présente description, en l'absence d'indications contraires, le terme « polymère » sera utilisé pour désigner, au sens large, aussi bien des homopolymères que des copolymères. Par « copolymère », on entend un polymère dérivé d'au moins deux espèces différentes de monomères.

Par « unité monomérique », on entend dans le cadre de la présente invention la plus petite unité constitutive dont la répétition conduit à une chaîne polymérique.

A l'issue de l'étape de greffage (iii) du procédé de l'invention, le polymère de type PPFS présente ainsi des chaînes polycarbonates/polyesters issues du ou desdits polymères polycarbonates/polyesters téléchéliques, liées en position *para* d'une partie des groupements pentafluorophényle par l'intermédiaire de liaisons thioéther.

L'invention concerne ainsi, selon un autre de ses aspects, un polymère en peigne, en particulier tel qu'obtenu selon le procédé de l'invention décrit précédemment, comprenant une chaîne principale de type PPFS formée à partir de monomères 1-éthényl- et/ou 1-allyl-2,3,4,5,6-pentafluorobenzène, une partie des unités monomériques de la chaîne principale étant porteuse de chaînes latérales polymériques, dites chaînes polycarbonates/polyesters, formées à partir d'au moins un monomère cyclique de cinq à huit chaînons choisi parmi des lactones et des carbonates cycliques ; lesdites chaînes polymériques latérales étant greffées *en para* des groupes pentafluorophényle par l'intermédiaire de liaisons thioéther.

De manière avantageuse, comme détaillé dans la suite du texte, la réaction de substitution nucléophile pour le greffage desdits polycarbonates/polyesters téléchéliques peut être opérée en présence d'une base aprotique plus faible que l'hydrure de sodium, l'hydroxyde de sodium et l'hydroxyde de potassium, de préférence d'une base aprotique présentant un pKa strictement inférieur à 15 et strictement supérieur à 10. En particulier, la réaction de substitution nucléophile peut être opérée en présence d'une base présentant un pKa strictement inférieur à 14, plus particulièrement inférieur ou égal à 13 et strictement supérieur à 10, voire compris entre 10,2 et 13, tels que le 1,8-diazabicyclo[5.4.0]undéc-7-ène (DBU), la triéthylamine (TEA) ou le carbonate de potassium (K₂CO₃), en particulier le DBU ou la TEA.

Ainsi, la préparation des polymères en peigne selon l'invention permet de s'affranchir des réactions secondaires de trans-estérification ou de trans-carbonation des polymères de type polycarbonate/polyester observées en présence d'une base forte.

Avantageusement, le procédé de l'invention permet ainsi un excellent contrôle du taux de greffage des chaînes latérales de type polycarbonate/polyester.

Également, le procédé de l'invention permet une grande variabilité du taux de greffage en chaînes latérales du polymère peigne obtenu. Le taux de greffage peut être plus particulièrement ajusté en faisant varier le rapport molaire entre lesdits polymères polycarbonates/polyesters téléchéliques et ledit polymère de type PPFS.

De manière avantageuse, le taux de greffage molaire des chaînes latérales polycarbonates/polyesters peut ainsi être supérieur ou égal à 1 % et aller jusqu'à environ 100 %, en particulier être compris entre 5 % et 90 %, plus particulièrement entre 5 % et 75 %, voire entre 10 % et 60 %. Dans un mode de réalisation particulier, le taux de greffage peut être strictement supérieur à 35 %, en particulier être compris entre 38 % et 75 % et plus particulièrement entre 40 % et 60 %.

Par ailleurs, il est du mérite des inventeurs d'avoir développé une méthode de synthèse permettant d'accéder à des polymères polycarbonates/polyesters téléchéliques de structure contrôlée, mis en œuvre selon le procédé de l'invention pour former les chaînes latérales du polymère peigne.

Comme détaillé dans la suite du texte, les polymères polycarbonates/polyesters téléchéliques peuvent être obtenus en une seule étape par polymérisation par ouverture de cycle d'un ou plusieurs monomères cycliques tels que décrits précédemment, par exemple du triméthylène carbonate et/ou de la ε-caprolactone, en présence d'au moins un amorceur qui est un mono ou poly-alcool, en particulier un monoalcool, porteur d'une fonction thiol libre, en particulier un mercapto-alcanol, par exemple le 6-mercaptohexan-1-ol, et d'un catalyseur, de préférence un catalyseur organique et plus préférentiellement choisi parmi le diphényl phosphate (DPP) et le 1,1' binaphtyl 2,2'diyl hydrogen phosphate (BNPH).

De manière avantageuse, cette méthode de synthèse des polycarbonates/polyesters téléchéliques mis en œuvre selon l'invention permet un excellent contrôle de la polymérisation, en particulier de la masse molaire et de la polydispersité des polycarbonates/polyesters téléchéliques obtenus.

Avantageusement, les polycarbonates/polyesters téléchéliques obtenus présentent un faible indice de polydispersité, avantageusement strictement inférieur à 1,2, de préférence compris entre 1 et 1,1.

Également, cette méthode de synthèse permet d'accéder à une excellente chimiosélectivité de la polymérisation, en ce qu'à l'issue de cette synthèse, au moins 70 % des chaînes de polycarbonate/polyester formées présentent la fonction thiol souhaitée à leur extrémité.

Par ailleurs, de manière avantageuse, comme détaillé dans la suite du texte, les inventeurs ont développé une méthode de purification du polymère peigne obtenu selon l'invention, aisée à mettre en œuvre et permettant d'éliminer les chaines de polycarbonates/polyesters n'ayant pas été greffées au niveau du polymère de type PPFS.

La méthode de synthèse des polycarbonates/polyesters téléchéliques destinés à former les chaînes latérales du polymère peigne selon l'invention, associée aux avantages précités liés à l'utilisation d'une base plus faible pour le greffage de ces polycarbonates/polyesters téléchéliques par l'intermédiaire de fonctions thioéther et à une purification du produit obtenu, permet d'accéder, de manière reproductible, à des polymères peignes de bonne pureté et de structure contrôlée, en particulier présentant des chaînes greffées de masse molaire contrôlée et de faible polydispersité.

Il est ainsi possible de faire varier les caractéristiques du polymère peigne, par exemple en termes de taux de greffage et de longueur des chaines latérales, de manière à optimiser les performances de l'électrolyte solide formé à partir de ces polymères.

De manière avantageuse, les fonctions hydroxyles aux extrémités des chaines polycarbonates/polyesters greffées du polymère peigne selon l'invention sont protégées. Comme détaillé dans la suite du texte, la protection des fonctions hydroxyles peut être plus particulièrement réalisée au niveau du polymère peigne obtenu à l'issue de l'étape (iii), avant ou après purification, par réaction de la ou desdites fonctions hydroxyles aux extrémités des chaînes polycarbonates/polyesters latérales, avec au moins un composé, dit agent de protection, choisi parmi les chlorures d'acyle, les anhydrides d'acide et les isocyanates.

Les polymères en peigne selon l'invention trouvent des applications particulièrement avantageuses pour former, en combinaison avec au moins un sel de métal alcalin ou alcalino-terreux, un électrolyte solide.

Par « électrolyte solide », on entend un électrolyte excluant la présence d'un composant sous forme liquide, et faisant office à la fois de séparateur et de conducteur ionique dans un système électrochimique. L'électrolyte solide selon l'invention se présente plus particulièrement sous la forme d'un film ou membrane électrolytique solide dans un système électrochimique.

Comme détaillé dans la suite du texte, les électrolytes solides préparés selon l'invention peuvent être de type électrolyte polymérique solide (SPE) ou électrolyte solide hybride (HSE). Les films ou membranes d'électrolyte solide préparés selon l'invention présentent avantageusement une bonne flexibilité.

L'invention concerne ainsi, selon un autre de ses aspects, l'utilisation d'au moins un polymère en peigne selon l'invention, en particulier tel qu'obtenu selon le procédé de l'invention, pour former, en combinaison avec au moins un sel de métal alcalin ou alcalino-terreux, un électrolyte solide destiné à un système électrochimique, en particulier à une batterie rechargeable, notamment une batterie au lithium.

L'invention concerne encore un électrolyte solide, notamment de type électrolyte polymérique solide (SPE) ou électrolyte solide hybride (HSE), comprenant, voire étant formé de :
- au moins un polymère en peigne selon l'invention, en particulier obtenu selon le procédé de l'invention, de préférence dont les fonctions hydroxyles aux extrémités des chaînes latérales greffées sont protégées ;
- au moins un sel de métal alcalin ou alcalino-terreux, en particulier un sel de lithium ; et
- éventuellement une ou plusieurs charges inorganiques, en particulier choisies parmi les charges conductrices et les charges non conductrices du ou des cations alcalins ou alcalino-terreux, en particulier du lithium.

Les électrolytes solides formés selon l'invention peuvent trouver des applications dans des systèmes électrochimiques variés, notamment dans des systèmes de stockage de l'énergie, en particulier dans des batteries rechargeables, notamment des batteries au lithium.

Ainsi, l'invention concerne encore l'utilisation d'un électrolyte solide selon l'invention dans un système électrochimique, en particulier dans une batterie au lithium.

Elle concerne encore un système électrochimique, en particulier un dispositif de stockage de l'énergie, notamment une batterie rechargeable, en particulier une batterie au lithium, notamment une batterie lithium-ion ou lithium-métal, comprenant un électrolyte solide, en particulier un film d'électrolyte solide tel que défini précédemment.

Comme illustré dans les exemples qui suivent, les électrolytes solides obtenus à partir des polymères en peigne selon l'invention conduisent à des batteries au lithium présentant d'excellentes performances, en particulier une conductivité ionique élevée, par exemple supérieure ou égale à 10⁻⁷ S.cm⁻¹ à 60°C, en particulier supérieure ou égale à 10⁻⁶ S.cm⁻¹, avantageusement supérieure ou égale à 10⁻⁵ S.cm⁻¹.

Les électrolytes solides préparés à partir des polymères peigne selon l'invention présentent également une bonne tenue mécanique et une grande stabilité thermique (qui assure la sécurité des dispositifs de stockage d'énergie les comprenant).

Un système électrochimique, par exemple une batterie au lithium, comprenant un électrolyte solide selon l'invention, peut fonctionner sur une large plage de température, de préférence entre 20 °C et 100 °C, plus préférentiellement entre 40 °C et 80 °C.

De manière avantageuse, un électrolyte solide à base d'un polymère en peigne selon l'invention, en particulier comprenant des chaînes latérales de type PTMC, peut être avantageusement mis en œuvre dans des batteries de densité énergétique élevée, en combinaison avec des électrodes positives dites à « haut » potentiel, c'est-à-dire fonctionnant à une différence de potentiel supérieure à 4 V versus Li/Li⁺, telles que des batteries Li⁰ vs. LiNi_{1/3}Mn_{1/3}Co_{1/3}O₂ (NMC) sans impacter la stabilité thermique et électrochimique de l'électrolyte.

D'autres caractéristiques, variantes et avantages du procédé de préparation d'un polymère peigne selon l'invention, du polymère peigne obtenu et de sa mise en œuvre dans un système électrochimique, ressortiront mieux à la lecture de la description, des exemples et figures qui vont suivre, donnés à titre illustratif et non limitatif de l'invention.

Dans le cadre de l'invention, on entend par :
- « C_{1-z} » où t et z sont des entiers, une chaîne carbonée pouvant avoir de t à z atomes de carbone ; par exemple C₁₋₄ une chaîne carbonée qui peut avoir de 1 à 4 atomes de carbone ;
- « alkyle », un groupe aliphatique saturé, linéaire ou ramifié ; par exemple un groupe C₁₋₄-alkyle représente une chaîne carbonée de 1 à 4 atomes de carbone, linéaire ou ramifiée, plus particulièrement un méthyle, éthyle, propyle, isopropyle, butyle, isobutyle, *tert*-butyle ;
- « alkylène », un radical divalent saturé, linéaire ou ramifié, dérivé d'un alkyle. Par exemple un groupe C₁-C₃-alkylène représente une chaine carbonée saturée, linéaire ou ramifiée, de 1 à 3 atomes de carbone, par exemple un méthylène, éthylène, 1-méthyléthylène ou propylène.
- « groupement polycyclique », un groupement présentant deux ou plusieurs noyaux (cycles), condensés (ortho-condensés ou ortho- et péri-condensés) les uns aux autres, c'est-à-dire présentant, deux à deux, au moins deux carbones en commun.
- « hétérocycle », un groupe cyclique, de préférence à 4, 5 ou 6 chaînons, comprenant un ou plusieurs hétéroatomes, en particulier choisis parmi l'oxygène, le soufre et l'azote. Les groupements mono- ou poly(hétéro)cycliques selon l'invention peuvent être insaturés, partiellement saturés ou saturés. Un cycle aromatique peut être notamment le benzène.

Dans la suite du texte, les expressions « compris entre ... et ... », « allant de ... à ... » et « variant de ... à ... » sont équivalentes et entendent signifier que les bornes sont incluses, sauf mention contraire.

### Brève description des dessins

[Fig 1] représente l'intensité du signal de mesure obtenu par résonance magnétique nucléaire (RMN) de ¹⁹F en fonction du déplacement chimique, exprimé en ppm, pour le polymère poly(2,3,4,5,6-pentafluorostyrène) ("PPFS-03") synthétisé en exemple 1.1.
[Fig 2] représente le diagramme d'élution obtenu par Chromatographie d'Exclusion Stérique (CES) dans du THF à 30°C (calibration TDS), en fonction du volume de rétention, obtenu pour le polymère poly(2,3,4,5,6-pentafluorostyrène) ("PPFS-03") synthétisé en exemple 1.1. L'ordonnée représente la détection obtenue par un détecteur de viscosité intrinsèque (IV-DP), diffusion de la lumière à faible angle (« low angle light scattering », LALS), diffusion de la lumière à angle droit (« right angle light scattering », RALS), et un réfractomère (RI).
[Fig 3] représente le diagramme d'élution obtenu par CES (THF, 30°C, calibration TDS), en fonction du volume de rétention, obtenu pour le polymère poly(2,3,4,5,6-pentafluorostyrène) ("PPFS-Em-01") synthétisé en exemple 1.2.
[Fig 4] représente l'intensité du signal de mesure obtenu par résonance magnétique nucléaire (RMN) de ¹⁹F en fonction du déplacement chimique, exprimé en ppm, pour le polymère poly(2,3,4,5,6-pentafluorostyrène) ("PPFS-Em-01") synthétisé en exemple 1.2.
[Fig 5] représente l'intensité du signal de mesure obtenu par RMN de ¹H en fonction du déplacement chimique, exprimé en ppm, pour le poly(triméthylène carbonate) téléchélique ("SH-PTMC-OH-01") synthétisé en exemple 2.1.
[Fig 6] représente le diagramme d'élution obtenu par CES (THF, 30°C, calibration universelle), en fonction du volume de rétention, obtenu pour le poly(triméthylène carbonate) téléchélique ("SH-PTMC-OH-01") synthétisé en exemple 2.1. L'ordonnée représente la détection obtenue par un réfractomètre (RI).
[Fig 7] représente l'intensité du signal de mesure obtenu par RMN de ¹H en fonction du déplacement chimique, exprimé en ppm, pour le poly(triméthylène carbonate) téléchélique ("SH-PTMC-OH-02") synthétisé en exemple 2.2.
[Fig 8] représente l'intensité du signal de mesure obtenu par RMN de ¹H en fonction du déplacement chimique, exprimé en ppm, pour le copolymère peigne poly(2,3,4,5,6-pentafluorostyrène) porteurs de greffons poly(triméthylène carbonate) ("PPFS-g-S-PTMC-OH-01") synthétisé en exemple 3.1.
[Fig 9] représente l'intensité du signal de mesure obtenu par RMN de ¹⁹F en fonction du déplacement chimique, exprimé en ppm, pour le copolymère peigne poly(2,3,4,5,6-pentafluorostyrène) porteurs de greffons poly(triméthylène carbonate) ("PPFS-g-S-PTMC-OH-01") synthétisé en exemple 3.1.
[Fig 10] représente le diagramme d'élution obtenu par CES (THF, 30°C, calibration TDS), en fonction du volume de rétention, pour le copolymère peigne poly(2,3,4,5,6-pentafluorostyrène) porteurs de greffons poly(triméthylène carbonate) ("PPFS-g-S-PTMC-OH-01") synthétisé en exemple 3.1.
[Fig 11] représente l'intensité du signal de mesure obtenu par RMN de ¹H en fonction du déplacement chimique, exprimé en ppm, pour le copolymère peigne poly(2,3,4,5,6-pentafluorostyrène) porteurs de greffons poly(triméthylène carbonate) ("PPFS-g-S-PTMC-OH-02") synthétisé en exemple 3.2.
[Fig 12] représente le diagramme d'élution obtenu par CES (THF, 30°C, calibration TDS), en fonction du volume de rétention, pour le copolymère peigne poly(2,3,4,5,6-pentafluorostyrène) porteurs de greffons poly(triméthylène carbonate) ("PPFS-g-S-PTMC-OH-02") synthétisé en exemple 3.2.
[Fig 13] représente l'intensité du signal de mesure obtenu par RMN de ¹H en fonction du déplacement chimique, exprimé en ppm, pour le copolymère peigne poly(2,3,4,5,6-pentafluorostyrène) porteurs de greffons poly(triméthylène carbonate) après protection des extrémités des chaînes latérales ("PPFS-g-S-PTMC-Et-01") selon l'exemple 3.3.
[Fig 14] représente l'intensité du signal de mesure obtenu par RMN de ¹H en fonction du déplacement chimique, exprimé en ppm, pour le poly(ε-caprolactone) téléchélique ("SH-PCL-OH-01") synthétisé en exemple 4.1.
[Fig 15] représente l'intensité du signal de mesure obtenu par RMN de ¹H en fonction du déplacement chimique, exprimé en ppm, pour le copolymère peigne poly(2,3,4,5,6-pentafluorostyrène) porteurs de greffons poly(ε-caprolactone) ("PPFS-g-S-PCL-OH-01") synthétisé en exemple 4.2.
[Fig 16] représente le diagramme d'élution obtenu par CES (THF, 30°C, calibration TDS), en fonction du volume de rétention, pour le poly(ε-caprolactone) téléchélique ("SH-PCL-OH-01") synthétisé en exemple 4.1, et pour le copolymère peigne poly(2,3,4,5,6-pentafluorostyrène) porteurs de greffons poly(ε-caprolactone) ("PPFS-g-S-PCL-OH-01") synthétisé en exemple 4.2. L'ordonnée représente la détection obtenue par un détecteur de viscosité intrinsèque (IV-DP).
[Fig 17] représente le diagramme d'élution obtenu CES (THF, 30°C, calibration universelle), en fonction du volume de rétention, pour un PTMC avant (« PTMC ») et après mise en présence avec du NaH à 65°C (« PTMC+NaH »).
[Fig 18] représente l'évolution de la conductivité ionique (en S.cm⁻¹) en fonction de la température (T en °C, et 1000/T, T étant exprimée en degré Kelvin) pour les électrolytes solides à base des polymères en peigne "PPFS-g_{0,5}-S-PTMC₃₇₀₀-Et", "PPFS-g_{0,4}-S-PTMC₅₅₀₀-Et", "PPFS-g_{0,2}-S-PTMC₅₀₀₀-Et" et "PPFS-g-S-PCL₃₀₀₀-OH" préparés selon l'exemple 5.

Dans la suite du texte, les expressions « compris entre ... et ... », « allant de ... à ... » et « variant de ... à ... » sont équivalentes et entendent signifier que les bornes sont incluses, sauf mention contraire.

### Description détaillée

### POLYMERE EN PEIGNE

### (i) Polymère de type PPFS destiné à former la chaîne principale du polymère peigne

Comme évoqué précédemment, le polymère peigne selon l'invention est formé à partir d'un polymère obtenu à partir de monomères 1-éthényl- et/ou 1-allyl- 2,3,4,5,6-pentafluorobenzène, et destiné à former la chaîne principale du polymère en peigne.

Le polymère de type PPFS peut être un homopolymère ou un copolymère.

Les monomères de type 1-éthényl-2,3,4,5,6-pentafluorobenzène, encore appelés plus couramment 2,3,4,5,6-pentafluorostyrène (PFS) et 1-allyl-2,3,4,5,6-pentafluorobenzène (nom IUPAC 1,2,3,4,5-pentafluoro-6-prop-2-énylbenzène) répondent à la formule (M1) suivante : 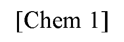 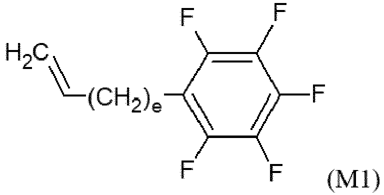 dans laquelle e vaut 0 (cas du pentafluorostyrène) ou e vaut 1 (cas du 1-allyl-2,3,4,5,6-pentafluorobenzène).

De préférence, le polymère de type PPFS est un homopolymère.

A titre d'exemple, le polymère de type PPFS peut être un poly(2,3,4,5,6-pentafluorostyrène) (PPFS) ou un poly(1,2,3,4,5-pentafluoro-6-prop-2-énylbenzène), de préférence un poly(2,3,4,5,6-pentafluorostyrène).

A des fins de simplification, on désigne plus simplement les polymères dérivés de monomères 1-éthényl- et/ou 1-allyl- 2,3,4,5,6-pentafluorobenzène, en particulier de type poly(2,3,4,5,6-pentafluorostyrène) ou poly(1,2,3,4,5-pentafluoro-6-prop-2-énylbenzène), sous la dénomination « polymère de type pentafluorostyrène » ou encore « polymère de type PPFS ».

Le polymère de type PPFS mis en œuvre pour former la chaîne principale d'un polymère en peigne selon l'invention présente avantageusement une masse molaire moyenne en nombre Mₙ supérieure ou égale à 10 000 g.mol⁻¹, en particulier comprise entre 10 000 g.mol⁻¹ et 1 000 000 g.mol⁻¹, en particulier entre 40 000 g.mol⁻¹ et 600 000 g.mol⁻¹, plus particulièrement comprise entre 40 000 g.mol⁻¹ et 400 000 g.mol⁻¹, voire comprise entre 50 000 g.mol⁻¹ et 100 000 g.mol⁻¹.

La masse moléculaire moyenne en nombre, dite encore masse molaire moyenne en nombre, d'un polymère de type PPFS peut être déterminée par chromatographie d'exclusion stérique (CES), de préférence avec une calibration TDS.

En particulier, le degré de polymérisation moyen en nombre du polymère de type PPFS, correspondant au nombre d'unités monomères constitutives du polymère, peut être supérieur ou égal à 50, en particulier compris entre 50 et 4 200 et plus particulièrement compris entre 50 et 520.

Selon un mode de de réalisation particulier, le polymère de type PPFS destiné à former la chaîne principale d'un polymère en peigne selon l'invention est un poly(2,3,4,5,6-pentafluorostyrène) (PPFS), en particulier présentant une masse moléculaire moyenne en nombre comprise entre 10 000 g.mol⁻¹ et 600 000 g.mol⁻¹ et plus particulièrement entre 40 000 g.mol⁻¹ et 100 000 g.mol⁻¹.

De préférence, la longueur du polymère de type PPFS, destiné à former la chaîne principale du polymère en peigne selon l'invention, autrement dit le degré de polymérisation du polymère de type PPFS formant la chaîne principale du polymère en peigne selon l'invention, est suffisamment élevée, de sorte que le polymère en peigne formé selon l'invention présente une masse molaire supérieure à la masse molaire dite d'enchevêtrement critique.

La masse molaire d'enchevêtrement critique, notée M_{c}, pour un polymère donné, est généralement définie comme la masse à partir de laquelle la dynamique du polymère se situe dans un régime de reptation. Cette masse molaire d'enchevêtrement critique peut être déterminée de manière empirique par des méthodes connues de l'homme du métier.

Le contrôle de la masse moléculaire moyenne du polymère en peigne selon l'invention permet de contrôler les propriétés mécaniques du polymère en peigne obtenu, et en particulier ses propriétés de viscoélasticité.

Le polymère en peigne selon l'invention est avantageusement apte à former un réseau tridimensionnel, résultant de l'enchevêtrement des chaînes polymériques, et présente un plateau caoutchoutique identifiable par exemple par des mesures rhéologiques (par exemple, module d'Young et module de cisaillement mesurés en analyse mécanique dynamique multifréquence) sur le polymère formé.

Dans un mode de réalisation particulier, le polymère de type PPFS répond à la formule (I) suivante : 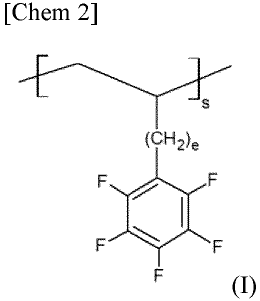
dans laquelle e vaut 0 ou 1 ;
s représente le nombre d'unités monomériques du polymère de type PPFS (correspondant au degré de polymérisation), en particulier s est supérieur ou égal à 50, en particulier compris entre 50 et 4 200.

Le polymère de type PPFS mis en œuvre dans le procédé selon l'invention, destiné à former la chaîne principale d'un polymère en peigne selon l'invention, peut être obtenu au préalable par des méthodes de synthèse connues de l'homme du métier. Par exemple, il peut être synthétisé par une méthode de polymérisation radicalaire, en particulier par polymérisation radicalaire contrôlée, telle que décrite par exemple par Atanasov *et al.* [7].

Alternativement, il peut être synthétisé par catalyse Ziegler-Natta. Les procédés de polymérisation Ziegler-Natta sont bien connues par exemple pour la synthèse de polystyrène [8]. Ils ont été décrits dans le cas de la synthèse du PPFS dans le document EP 3 763 748 A1 [9].

Avantageusement, la synthèse par catalyse Ziegler-Natta permet de conduire à des polymères de masses moléculaires moyennes et de dispersité ajustables, avec de bons rendements.

Le polymère de type PPFS peut ainsi être formé par polymérisation à partir du mélange d'un système catalytique de type Ziegler Natta comprenant un catalyseur et un co-catalyseur ; et de monomères 1-éthényl- et/ou 1-allyl- 2,3,4,5,6-pentafluorobenzène.

Cette méthode de synthèse comprend plus particulièrement :
- la mise en contact d'un système catalytique de type Ziegler Natta comprenant un catalyseur et un co-catalyseur ; avec des monomères de formule (M1) précitée ;
- l'exposition du mélange ainsi formé à des conditions d'agitation et de chauffage propice à la polymérisation desdits monomères.

Le système catalytique de type Ziegler-Natta peut être de toutes générations, i.e. 1, 2, 3, 4 ou ultérieures. Ledit système catalytique peut être supporté, homogène ou hétérogène.

Le système catalytique de type Ziegler Natta mis en œuvre pour la synthèse du polymère de type PPFS peut comprendre :
- un catalyseur contenant un dérivé, notamment un halogénure ou un alcoolate, d'un métal de transition du groupe IV, V ou VI de la classification périodique des éléments, de préférence choisi parmi le titane, le zirconium, le vanadium, le cobalt, le chrome et le nickel ; et
- un co-catalyseur contenant un hydrure ou un dérivé alkylé d'un élément des colonnes 1, 2 ou 13 de la classification périodique des éléments, et de préférence contenant un hydrure ou un dérivé alkylé d'aluminium.

Selon une variante particulière de ce mode de réalisation, le catalyseur contenant un dérivé d'un métal de transition du groupe IV, V ou VI de la classification périodique des éléments est choisi parmi TiCl₄, TiCl₃, VCl₃, VCl₄, CoCl₂, Ti(OBu)₄ et Cr(acac)₃.

En particulier, le co-catalyseur contenant un hydrure ou un dérivé alkylé d'un élément des colonnes 1, 2 ou 13 de la classification périodique des éléments est choisi parmi AlEt₃, AlEt₂Cl, AlEtCl, AlEtCl₂, AlBu₃, GaEt₃ et BeEt₂. De manière préférée, selon ce mode de réalisation, le système catalytique est choisi parmi TiCl₄/AlEt₃, TiCl₃/AlEt₂Cl, TiCl₃/GaEt₃, TiCl₃/BeEt₂, VCl₄/AlEt₂Cl, CoCl₂/AlEtCl, VCl₃/AlEt₃, Ti(OBu)₄/AlEt₃, Cr(acac)₃/AlEt₃, et encore plus préférentiellement est TiCl₄/AlEt₃.

Un tel système catalytique de type Ziegler-Natta peut être par exemple préparé en ajoutant du triéthyl aluminium à du chlorure de titane, puis en laissant stabiliser le mélange pendant 30 minutes.

Alternativement, le système catalytique de type Ziegler-Natta peut comprendre :
- du TiCl₄ supporté sur du MgCl₂ à titre de catalyseur ; et
- du AlEt₃ à titre de co-catalyseur.

Alternativement, le système catalytique de type Ziegler Natta peut comprendre :
- un catalyseur choisi parmi les métallocènes ; et
- un co-catalyseur choisi parmi le méthylaluminoxane (MAO), Ph₃C⁺B(C₆F₅)₄⁻ et B(C₆F₅)₃.

De manière préférée, selon ce mode de réalisation, le système catalytique est choisi parmi ZrCp₂Cl₂/MAO, ZrCp₂Cl₂/B(C₆F₅)₃, ZrCp₂Cl₂/Ph₃C⁺B(C₆F₅)₄⁻, CpTiCl₃/MAO, et

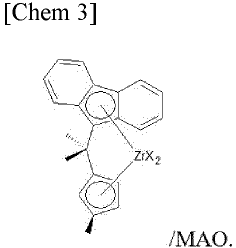

Selon un mode de réalisation préféré, le ratio molaire catalyseur/co-catalyseur est compris entre 0,3 et 10, de préférence compris entre 0,5 et 2.

La mise en contact d'un système catalytique de type Ziegler-Natta, en particulier tel que défini précédemment, avec les monomères de formule (M1) précitée peut être effectuée par simple mélange, en présence ou non d'un solvant tel que le fluorobenzène ou le tétrahydrofurane. Le ratio molaire monomères (M1)/système catalytique peut être compris entre 10 et 1000, en particulier entre 10 et 250.

Le mélange est ensuite exposé à des conditions d'agitation et de chauffage propices à la polymérisation des monomères (M1). En particulier, le mélange peut être exposé à un palier de température compris entre 60°C et 80°C, notamment pendant une durée d'au moins 10 heures. L'agitation peut être opérée de manière manuelle ou mécanique, en particulier à l'aide d'un dispositif classique d'agitation.

De préférence, la synthèse du polymère de type PPFS est suivie d'une étape de neutralisation du catalyseur, par exemple avec de l'éthanol, puis de filtration du système catalytique. Le polymère de type PPFS ainsi formé peut être précipité, par exemple dans du méthanol.

### (ii) Polymère polycarbonate/polyester téléchélique destiné à former les chaînes latérales du polymère peigne

Comme évoqué précédemment, la formation d'un polymère peigne selon l'invention met en œuvre au moins un polymère, destiné à former les chaînes latérales du polymère peigne, obtenu à partir d'un ou plusieurs monomères cycliques de cinq à huit chaînons choisis parmi les lactones et les carbonates cycliques, et fonctionnalisé par au moins une fonction hydroxyle à l'une de ses extrémités, et une fonction thiol libre, en particulier à l'autre de ses extrémités.

De préférence, un polymère destiné à former les chaînes latérales du polymère peigne, obtenu à partir d'un ou plusieurs monomères cycliques de cinq à huit chaînons choisis parmi les lactones et les carbonates cycliques, est fonctionnalisé par une unique fonction hydroxyle à l'une de ses extrémités, et une fonction thiol libre à l'autre de ses extrémités. De préférence, il s'agit d'un polymère linéaire fonctionnalisé en chacune de ses extrémités.

D'une manière générale, on désignera sous l'appellation « polycarbonate/polyester téléchélique », un polymère, destiné à former les chaînes latérales d'un polymère peigne selon l'invention, porteur d'au moins une fonction hydroxyle et d'une fonction thiol libre, de préférence en chacune des extrémités dudit polymère.

Le ou les monomères cycliques à partir desquels est obtenu un polymère polycarbonate/polyester téléchélique selon l'invention répondent plus particulièrement à la formule (M2) suivante : 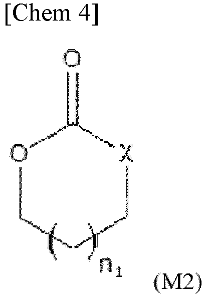 dans laquelle :
- X représente un atome de carbone ou un atome d'oxygène ;
- n₁ vaut 0 ou est un entier compris entre 1 et 3 ;
lesdits monomères étant éventuellement substitués, sur un ou plusieurs des atomes de carbone du cycle, par un ou plusieurs substituants R₁. Les substituants du monomère cyclique, R₁, peuvent être plus particulièrement choisis parmi des groupements alkyles, en particulier en C₁ à C₅, linéaires ou ramifiés.

Selon un mode de réalisation particulier, le polymère téléchélique destiné à former les chaînes latérales du polymère peigne selon l'invention est un polycarbonate téléchélique, autrement dit est obtenu à partir de monomères de type carbonates cycliques de cinq à huit chaînons.

Les carbonates cycliques peuvent être plus particulièrement de formule (M3) suivante : 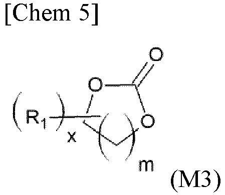
dans laquelle m étant un entier compris entre 1 et 3, de préférence m vaut 1 ou 2, plus préférentiellement m vaut 2 ;
x vaut 0 ou est un entier compris entre 1 et 2m+2 ; et R₁, porté(s) par un ou plusieurs atomes de carbone du cycle, représentent, indépendamment les uns des autres, des substituants, en particulier des groupements alkyles, en particulier en C₁ à C₅, linéaires ou ramifiés.

De préférence, x vaut 0.

A titre d'exemple de monomère carbonate cyclique, on peut citer le triméthylène carbonate et ses dérivés, en particulier le triméthylène carbonate.

Selon un autre mode de réalisation particulier, le polymère destiné à former les chaînes latérales du polymère peigne selon l'invention est un polyester téléchélique, autrement dit est obtenu à partir de monomères de type lactone.

Par lactone, on entend plus particulièrement des monomères répondant à la formule (M4) suivante : 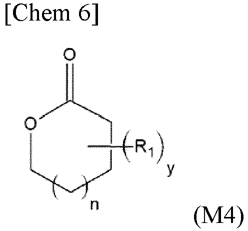
dans laquelle n est un entier allant de 1 à 3, en particulier n vaut 2 ;
y vaut 0 ou est un entier compris entre 1 et 2n+6 ; et R₁, porté(s) par un ou plusieurs atomes de carbone du cycle, représentent, indépendamment les uns des autres, des substituants, en particulier des groupements alkyles, en particulier en C₁ à C₅, linéaires ou ramifiés. En particulier, y vaut 0.

A titre d'exemple de monomère de type lactone, on peut citer l'ε-caprolactone.

De préférence, le polycarbonate/polyester téléchélique est formé à partir d'un ou plusieurs monomères choisis parmi le triméthylène carbonate et la ε-caprolactone.

Les polymères téléchéliques destinés à former les chaînes latérales du polymère peigne selon l'invention peuvent être des homopolymères ou des copolymères, en particulier des homopolymères, obtenus à partir d'au moins un monomère cyclique de cinq à huit chaînons choisi parmi des lactones et les carbonates cycliques. On désigne selon l'invention les homopolymères ou copolymères, en particulier les homopolymères, obtenus à partir d'au moins un monomère cyclique de cinq à huit chaînons choisi parmi des lactones et les carbonates cycliques, sous l'appellation générale « polycarbonate/polyester ».

De préférence, les polymères téléchéliques destinés à former les chaînes latérales du polymère peigne selon l'invention peuvent être des homopolymères ou des copolymères, en particulier des homopolymères, obtenus à partir d'un ou plusieurs monomère(s) cyclique(s) choisi(s) parmi le triméthylène carbonate et la ε-caprolactone.

En particulier, un polymère téléchélique destiné à former les chaînes latérales du polymère peigne selon l'invention peut être un poly(triméthylène carbonate) (PTMC) ou un poly(ε-caprolactone) (PCL) téléchélique, présentant à l'une de ses extrémités une fonction thiol libre et à l'autre de ses extrémités au moins une fonction hydroxyle, de préférence une seule fonction hydroxyle.

Comme indiqué précédemment, un polymère polycarbonate/polyester téléchélique mis en œuvre selon l'invention pour former les chaînes latérales du polymère peigne présente une ou plusieurs fonctions hydroxyles à l'une de ses extrémités, et une fonction thiol libre. Dans un mode de réalisation particulier, ledit polymère polycarbonate/polyester téléchélique mis en œuvre selon l'invention présente une fonction hydroxyle à l'une de ses extrémités et une fonction thiol libre à l'autre de ses extrémités.

Par fonction thiol libre, on entend une fonction -SH non protégée, et pouvant réagir par substitution nucléophile avec une fonction fluor dans les conditions décrites dans la suite du texte.

Les inventeurs ont ainsi développé une méthode de synthèse de tels polymères polycarbonates/polyesters téléchéliques, en une seule étape, par polymérisation par ouverture de cycle (ou ROP pour Ring-Opening Polymerization en terminologie anglo-saxonne) d'un ou plusieurs monomères cycliques tels que décrits précédemment, par exemple du triméthylène carbonate et/ou de la ε-caprolactone, en présence d'au moins un amorceur qui est un mono ou poly-alcool porteur d'une fonction thiol libre, en particulier un monoalcool porteur d'une fonction thiol libre.

La synthèse de polyesters ou de polycarbonates par polymérisation par ouverture de cycle sous l'action d'un catalyseur et d'un amorceur comportant une fonction hydroxyle est bien connue. Plus particulièrement, la ROP par voie cationique ([10]-[12]) de PCL ou PTMC a été proposée, par exemple par Makiguchi [12] qui met en œuvre, à titre d'organo-catalyseur, le diphényl phosphate (DPP) et un amorceur de type phényl propanol et permet d'accéder à une polymérisation contrôlée, en particulier à un indice de polydispersité (IP) faible et à un bon contrôle de la masse molaire en fonction du rapport molaire initial monomère/amorceur. La polymérisation fait intervenir quasi-exclusivement le mécanisme de monomère activé, autrement dit, l'amorçage et la propagation de la polymérisation opèrent par réaction entre le monomère et une fonction hydroxyle porté par l'amorceur ou se trouvant en bout de chaîne se propageant. De fait, la nature des bouts de chaînes linéaires est contrôlée, l'un des bouts présentant une fonction hydroxyle et l'autre extrémité est dictée par la nature de l'amorceur, et donc, dans le cas d'un amorceur de type phényl propanol, présente un caractère non réactif. Le 1,1' binaphtyl 2,2' diyl hydrogen phosphate (BNPH) a également été proposé comme catalyseur, et présente une meilleure activité que le DPP [13].

Quelques études ont déjà reporté la possibilité de synthèse d'un poly(caprolactone) téléchélique comportant une fonction thiol sur une extrémité et une fonction hydroxyle sur l'autre extrémité. Zhu *et al* [14] propose ainsi une synthèse d'un poly(caprolactone) en utilisant le triphénylphosphate d'ytrium comme catalyseur et le mercapto hexan-1-ol comme amorceur de la polymérisation. Les conditions mises en œuvre sont telles que 70 à 80 % des chaînes synthétisées présentent une fonction thiol à une extrémité et une fonction hydroxyle à l'autre, soit une bonne « fidélité de la fonction thiol ». Il a été montré que cette chimiosélectivité ou « fidélité de la fonction thiol » peut être encore augmentée lorsque du triflate d'étain [15] est utilisé comme catalyseur ou encore des catalyseurs organiques tels que le diphényl phosphate (DPP) [16]. A la connaissance des inventeurs, aucune étude n'a encore proposé la synthèse de polycarbonate, par exemple de PTMC, téléchélique présentant une fonction thiol réactive, en particulier à l'une de ses extrémités.

Les polymères polycarbonates/polyesters téléchéliques mis en œuvre selon l'invention pour former les chaînes latérales sont avantageusement obtenus par ROP d'un ou plusieurs monomères cycliques tels que décrits précédemment, par exemple du triméthylène carbonate ou de la ε-caprolactone, en présence d'au moins un amorceur qui est un mono ou poly-alcool, en particulier un monoalcool, porteur d'une fonction thiol libre et d'un catalyseur, de préférence d'un organo-catalyseur.

De préférence, l'amorceur mis en œuvre pour la synthèse par ROP d'un polycarbonate/polyester téléchélique selon l'invention est un mercapto-alcool, et plus particulièrement un mercapto-alcanol, en particulier de formule :

[Chem 7] HS-(CH₂)_{q}-CH₂-OH,

dans laquelle :
q vaut 0 ou est un entier compris entre 1 et 10, en particulier entre 3 et 7, de préférence vaut 5.

L'amorceur peut être par exemple choisi parmi le 4-mercaptobutan-1-ol, le 5-mercaptopentan-1-ol, le 6-mercaptohexan-1-ol et le 7-mercaptoheptan-1-ol. A titre d'exemple, l'amorceur est le 6-mercaptohexan-1-ol.

Le catalyseur mis en œuvre pour la réaction de ROP est de préférence un catalyseur organique ou organo-catalyseur, tels que par exemple le diphényl phosphate (DPP) ou le 1,1' binaphtyl 2,2'diyl hydrogen phosphate (BNPH). Le catalyseur est de préférence mis en œuvre dans un rapport molaire catalyseur/amorceur compris entre 0,1 et 10, en particulier entre 0,25 et 1.

L'homme du métier est à même d'ajuster les conditions opératoires de la réaction de ROP. La réaction peut être conduite sous agitation en milieu solvant, par exemple dans un ou plusieurs solvants apolaires et aprotiques, ou en masse.

De préférence, la réaction est conduite dans un ou plusieurs solvants organiques, par exemple le dichlorométhane (DCM), ou le toluène. Avantageusement, le solvant organique permet la dissolution du ou desdits monomères et de l'amorceur. De préférence, la concentration en monomère cyclique dans le solvant organique est comprise entre 10 à 1000 g/L, en particulier entre 100 et 330 g/L.

La synthèse peut être réalisée à une température comprise entre 20°C et 50°C. Elle peut être conduite sous reflux.

La durée de réaction peut être comprise entre 5 heures et 5 jours. Elle peut être adaptée en fonction de la nature du monomère cyclique et de la masse molaire souhaitée.

La réaction de polymérisation peut être stoppée par ajout d'une base telle que la triéthylamine (TEA) ou par utilisation d'une résine échangeuse d'ion. Le polycarbonate/polyester téléchélique synthétisé peut être récupéré par précipitation dans un solvant tel que le méthanol.

De manière avantageuse, la méthode décrite précédemment pour la synthèse des polycarbonates/polyesters téléchéliques mis en œuvre selon l'invention permet un bon contrôle de la polymérisation, en particulier de la masse molaire et de la polydispersité des polycarbonates/polyesters téléchéliques obtenus.

En particulier, la masse molaire des polymères téléchéliques obtenus peut être ajustée en faisant varier le rapport molaire entre les monomères et l'amorceur. Selon un mode de réalisation particulier, le ou lesdits monomères et ledit amorceur sont mis en œuvre dans un rapport molaire monomère(s)/amorceur compris entre 1 et 1000, de préférence entre 1 et 200, en particulier entre 10 et 100, notamment entre 20 et 100.

De préférence, la masse molaire moyenne en nombre d'un polycarbonate/polyester téléchélique destiné à former les chaînes latérales d'un polymère peigne selon l'invention est strictement supérieure à 2 000 g.mol⁻¹, afin de permettre un bon contrôle des extrémités des chaînes polycarbonates/polyesters formées. En particulier, le polycarbonate/polyester téléchélique peut présenter une masse molaire moyenne en nombre comprise entre 2 000 g.mol⁻¹ et 20 000 g.mol⁻¹ et plus particulièrement entre 2 500 g.mol⁻¹ et 10 000 g.mol⁻¹, notamment entre 3 000 g.mol⁻¹ et 7500 g.mol⁻¹.

La masse moléculaire moyenne en nombre peut être déterminée par chromatographie d'exclusion stérique (CES), notamment avec calibration universelle. De préférence, la masse moléculaire moyenne en nombre d'un polycarbonate/polyester téléchélique est déterminée par analyse RMN ¹H.

Avantageusement, les polycarbonates/polyesters téléchéliques obtenus présentent un faible indice de polydispersité, avantageusement strictement inférieur à 1,2, de préférence compris entre 1 et 1,1.

L'indice de polydispersité, noté IP, est égal au rapport de la masse molaire moyenne en poids Mw sur la masse molaire moyenne en nombre Mn. La masse molaire moyenne en poids peut être déterminée par chromatographie d'exclusion stérique, notamment avec calibration universelle, ou par RMN ¹H. De préférence, l'indice de polydispersité d'un polycarbonate/polyester téléchélique est déterminé par chromatographie d'exclusion stérique (CES), notamment avec calibration universelle.

De manière avantageuse, la méthode de synthèse des polymères téléchéliques selon l'invention permet d'accéder à une bonne chimiosélectivité de la polymérisation. L'amorçage et la propagation de la polymérisation vont faire intervenir essentiellement une fonction hydroxyle portée par l'amorceur ou se trouvant en bout de chaîne lors de la propagation. En conséquence, à l'issue de la synthèse, au moins 70 % des chaînes polymériques formées, en particulier au moins 80 %, sont des polymères téléchéliques selon l'invention, autrement dit présentent au moins une fonction hydroxyle libre à l'une de ses extrémités, et une fonction thiol libre, en particulier à l'autre de ses extrémités.

Dans un mode de réalisation particulier, le polycarbonate/polyester téléchélique mis en œuvre selon l'invention pour former les chaînes latérales d'un polymère peigne selon l'invention répond à la formule (II) suivante : 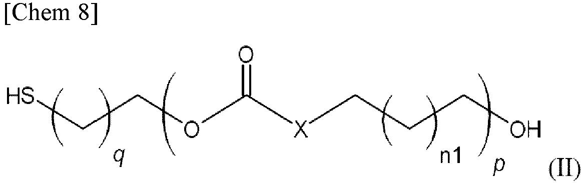 dans laquelle q est tel que défini précédemment pour l'amorceur mercapto-alcanol, n₁ vaut 0 ou est un entier compris entre 1 et 3, X représente un atome de carbone ou un atome d'oxygène, et p représente le nombre d'unités monomériques du polymère téléchélique (correspondant au degré de polymérisation), en particulier p est supérieur ou égal à 20, en particulier compris entre 20 et 200, plus particulièrement compris entre 24 et 100, voire compris entre 31 et 75.

Il est entendu que X et n₁ peuvent être identiques ou différents pour les p unités monomériques du polymère téléchélique, le polymère téléchélique pouvant ainsi être un homopolymère de type polycarbonate, par exemple un PTMC, un homopolymère de type polyester, par exemple un poly(caprolactone) ou encore un copolymère formé à partir d'un ou plusieurs monomères cycliques distincts choisis parmi les lactones et les carbonates cycliques. De préférence, X et n₁ sont identiques pour les p unités monomériques du polymère téléchélique.

Dans un mode de réalisation particulier, le polymère téléchélique est un polycarbonate téléchélique de formule (II-a) suivante : 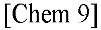 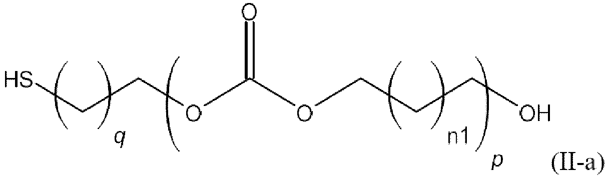 dans laquelle q, p et n₁ sont tels que définis précédemment.

Dans un autre mode de réalisation particulier, le polymère téléchélique peut être un polyester de formule (II-b) suivante : 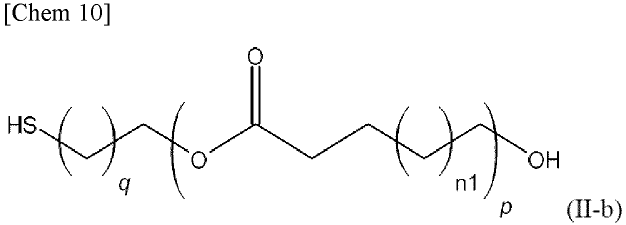 dans laquelle q, p et n₁ sont tels que définis précédemment.

Selon un mode de réalisation particulier, le polymère téléchélique mis en œuvre pour former les chaînes latérales d'un polymère peigne selon l'invention est un poly(triméthylène carbonate) présentant à l'une de ses extrémités une fonction thiol libre et à l'autre de ses extrémités au moins une fonction hydroxyle, de préférence une seule fonction hydroxyle. Selon un autre mode de réalisation particulier, le polymère téléchélique mis en œuvre pour former les chaînes latérales d'un polymère peigne selon l'invention est un poly(ε-caprolactone), présentant à l'une de ses extrémités une fonction thiol libre et à l'autre de ses extrémités au moins une fonction hydroxyle, de préférence une seule fonction hydroxyle.

### (iii) Obtention du polymère peigne

Comme évoqué précédemment, le polymère peigne selon l'invention est obtenu par greffage des chaînes du ou desdits polymères polycarbonates/polyesters téléchéliques sur le polymère de type PPFS. Plus particulièrement, l'obtention du polymère peigne fait intervenir le greffage des polymères polycarbonates/polyesters téléchéliques, en particulier tels que décrits précédemment, en position *para* d'une partie des groupements pentafluorophényle des unités monomériques du polymère de type PPFS.

Il est entendu que le procédé peut mettre en œuvre un ou plusieurs polymères téléchéliques distincts, conduisant à des chaînes latérales identiques ou différentes sur le polymère de type PPFS. De préférence, le procédé de l'invention met en œuvre un unique polymère téléchélique, en particulier tel que décrit précédemment.

Le greffage des chaînes latérales sur le polymère de type PPFS est plus particulièrement opéré par substitution nucléophile entre la fonction thiol portée par le polymère téléchélique et un atome de fluor en position *para* d'un groupement pentafluorophényle du polymère de type PPFS.

Cette réaction de substitution nucléophile est régiosélective, à savoir que seul l'atome de fluor en position *para* d'un groupe pentafluorophényle est substitué. Une telle réaction de substitution nucléophile entre un atome de fluor et une fonction thiol a par exemple été décrite pour le greffage d'un decanethiol perfluoré ou d'un acide mercapto-propanoïque ou mercapto-acétique sur un polymère de type PPFS [17,18].

La réaction de substitution nucléophile pour le greffage des polymères téléchéliques selon l'invention est plus particulièrement réalisée en présence d'une base. Avantageusement, elle est réalisée en présence d'une base aprotique plus faible que l'hydrure de sodium (NaH), l'hydroxyde de sodium (NaOH) et l'hydroxyde de potassium (KOH), de préférence d'une base aprotique présentant un pKa strictement inférieur à 15 et strictement supérieur à 10, en particulier strictement inférieur à 14, plus particulièrement inférieur ou égal à 13 et strictement supérieur à 10, voire compris entre 10,2 et 13.

Avantageusement, la réaction de substitution nucléophile pour le greffage des polycarbonates/polyesters téléchéliques est réalisée en présence d'une base choisie parmi le 1,8-diazabicyclo[5.4.0]undéc-7-ène (DBU, ou nom UICPA 2,3,4,6,7,8,9,10-octahydropyrimido[1,2-a]azépine), la triéthylamine (TEA) et le carbonate de potassium (K₂CO₃), en particulier choisie parmi le 1,8-diazabicyclo[5.4.0]undéc-7-ène (DBU) et la triéthylamine (TEA). De manière plus préférée, la base est le 1,8-diazabicyclo[5.4.0]undéc-7-ène (DBU).

En particulier, la base peut être mise en œuvre dans un rapport molaire base/polymère téléchélique compris entre 0,1 et 1.

La réaction de substitution pour le greffage des polymères polycarbonates/polyesters téléchéliques sur le polymère de type PPFS peut être plus particulièrement opérée en milieu solvant. Le milieu solvant permet de solubiliser le polymère de type PPFS et le polycarbonate/polyester téléchélique. Il peut être formé d'un ou plusieurs solvant(s) polaire(s) aprotique(s), en particulier choisis parmi le tétrahydrofurane (THF), des amides telles que la N,N-diméthylacétamide (DMAc), la N,N-diméthylformamide (DMF), la N-méthyl-2-pyrrolidone (NMP) ; la méthyléthylcétone (MEK), la N-méthyl-2-pyrrolidone et leurs mélanges, de préférence dans le tétrahydrofurane (THF), la N,N-diméthylformamide (DMF) ou la méthyléthylcétone (MEK), plus préférentiellement la méthyléthylcétone (MEK).

Le procédé de l'invention permet une grande variabilité du taux de greffage en chaînes latérales du polymère peigne obtenu.

Le taux de greffage peut être plus particulièrement ajusté en faisant varier le rapport molaire entre les fonctions thiols présents sur les chaînes de polycarbonate/polyester téléchélique et les unités monomèriques du polymère de type PPFS. En particulier, le ou lesdits polymères téléchéliques et ledit polymère de type PPFS peuvent être mis en œuvre dans un rapport molaire polymères téléchéliques/unités monomériques du polymère de type PPFS compris entre 0,1 et 1.

De manière avantageuse, le taux de greffage molaire des chaînes latérales de type polycarbonate/polyester peut ainsi être supérieur ou égal à 1 % et inférieur ou égal à 100 %, en particulier être compris entre 5 % et 90 %, plus particulièrement entre 5 % et 75 %, voire entre 10 % et 60 %. Avantageusement, le taux de greffage peut être strictement supérieur à 35 %, en particulier être compris entre 38 % et 75 % et plus particulièrement entre 40 % et 60 %.

Le taux de greffage molaire est défini comme le pourcentage d'unités de répétition de la chaine principale de type PPFS présentant des chaînes latérales. Le taux de greffage molaire peut être caractérisé par résonance magnétique nucléaire (RMN) du fluor F¹⁹. Il peut également être caractérisé par CES.

La réaction de substitution peut être effectuée à une température comprise entre 10°C et 100°C, en particulier entre 15°C et 40°C, de préférence entre 20°C et 30°C, par exemple à température ambiante. La durée de réaction peut être comprise entre 3 heures et 48 heures, en particulier comprise entre 6 heures et 24 heures, plus particulièrement entre 10 heures et 20 heures.

De préférence, le milieu réactionnel est maintenu sous agitation pendant la réaction de greffage.

A l'issue du greffage, le polymère en peigne synthétisé peut être récupéré par précipitation dans un solvant tel que l'éthanol.

### Polymère peigne

A l'issue de l'étape de greffage, le polymère de type PPFS présente ainsi des chaînes polycarbonates/polyesters issues du ou desdits polycarbonates/polyesters téléchéliques liées en position *para* d'une partie des groupements pentafluorophényle par l'intermédiaire de liaisons thioéther.

### Purification du polymère peigne

Le polymère en peigne obtenu à l'issue du greffage (iii) des chaînes polycarbonate/polyester sur la chaîne principale de type PPFS peut être soumis à une ou plusieurs étapes ultérieures de purification.

Avantageusement, la purification du polymère peigne selon l'invention est opérée par solubilisation du polymère obtenu à l'issue de l'étape (iii) de greffage des chaînes latérales dans un solvant organique, puis par précipitation du polymère peigne dans un mélange d'un premier solvant choisi parmi le méthanol, l'éthanol, le diéthyl éther et leurs mélanges et d'un deuxième solvant choisi parmi le dichlorométhane (DCM), l'acétone, le tétrahydrofurane (THF), la méthyléthylcétone (MEK), la N,N-diméthylformamide (DMF) et leurs mélanges, suivie d'une séparation liquide/solide, par exemple une filtration, et d'un séchage (évaporation des solvants). En particulier, ledit premier solvant et ledit deuxième solvant sont miscibles.

Le solvant de solubilisation du polymère peigne peut être par exemple du dichlorométhane (DCM), de l'acétone, du tétrahydrofurane (THF), de la méthyléthylcétone (MEK), de la N,N-diméthylformamide (DMF) ou leurs mélanges, en particulier du dichlorométhane.

De préférence, le polymère est précipité dans un mélange d'acétone et de méthanol, l'homme du métier étant à même d'ajuster le rapport volumique acétone/méthanol. En particulier, le rapport volumique acétone/méthanol peut être compris entre 20/80 et 90/10, plus particulièrement entre 40/60 et 80/20, notamment entre 50/50 et 70/30, voire entre 55/45 et 65/35.

De façon surprenante, comme illustré en exemples, les inventeurs ont montré qu'un tel protocole de purification permet avantageusement d'éliminer les chaînes de polycarbonates/polyesters non greffées.

De préférence, la purification du polymère peigne selon l'invention est opérée par solubilisation du polymère obtenu à l'issue de l'étape (iii) de greffage des chaînes latérales dans du dichlorométhane, puis par précipitation du polymère peigne dans un mélange acétone/méthanol, suivie d'une séparation liquide/solide, par exemple une filtration, et d'un séchage (évaporation des solvants).

Protection des bouts de chaînes hydroxyles du polymère en peigne

Dans un mode de réalisation particulier, les fonctions hydroxyles présentes aux extrémités des chaînes polycarbonate/polyester latérales du polymère peigne peuvent se présenter sous forme protégée (ou « coiffée »).

Le procédé de préparation d'un polymère en peigne selon l'invention peut ainsi comprendre en outre une étape de protection des fonctions hydroxyles présentes aux extrémités des chaînes polycarbonates/polyesters latérales dudit polymère peigne, par réaction avec au moins un composé, dit agent de protection, tel que décrit dans la suite du texte.

La protection des fonctions hydroxyles peut être plus particulièrement opérée à l'issue de la synthèse du polymère peigne, de préférence après purification comme décrit ci-dessus.

La formation d'extrémités hydroxyles coiffées (plus généralement désignées sous l'appellation « end-capped » en terminologie anglo-saxonne) permet avantageusement d'accroître la stabilité électrochimique de l'électrolyte solide formé à partir du ou desdits polymères peignes, les fonctions terminales hydroxyle étant sensibles à la réduction et à l'oxydation, et susceptibles de se dégrader au contact des sels de lithium.

Une fonction hydroxyle est plus particulièrement protégée en formant une fonction plus stable chimiquement et électrochimiquement. Par exemple, la protection des fonctions hydroxyles peut être plus particulièrement réalisée par réaction de ladite fonction hydroxyle en bout de chaîne avec au moins un composé, dit agent de protection, choisi parmi les chlorures d'acyle, par exemple le chlorure de benzoyle, le chlorure d'acétyle, etc. ; les anhydrides d'acide par exemple l'anhydride acétique, etc., et les isocyanates comme l'isocyanate de p-toluènesulfonyle, etc.

La protection des fonctions hydroxyles peut être réalisée en ajoutant directement le ou lesdits agents de protection dans le milieu réactionnel obtenu à l'issue de la synthèse du polymère peigne en étape (iii) ou ultérieurement à une étape de purification telle que décrite précédemment, du polymère peigne.

L'homme du métier est à même d'ajuster les conditions opératoires pour accéder à la protection de la ou des fonctions hydroxyles des extrémités des chaînes latérales du polymère peigne selon l'invention. Un exemple de mode opératoire pour la protection des fonctions hydroxyles à l'aide du chlorure d'acétyle est par exemple illustré dans la partie exemple qui suit.

L'invention se rapporte ainsi à un polymère en peigne, en particulier tel qu'obtenu à l'issue du procédé de l'invention décrit précédemment, comprenant une chaîne principale de type PPFS formée à partir de monomères 1-éthényl- et/ou 1-allyl- 2,3,4,5,6-pentafluorobenzène, une partie des unités monomériques de la chaîne principale étant porteuse de chaînes latérales polymériques, dites chaînes polycarbonates/polyesters, formées à partir d'au moins un monomère cyclique de cinq à huit chaînons choisi parmi des lactones et des carbonates cycliques ; lesdites chaînes polymériques latérales étant greffées *en para* des groupes pentafluorophényle par l'intermédiaire de liaisons thioéther.

Les caractéristiques décrites précédemment dans le cadre du procédé de préparation du polymère peigne, en particulier pour le polymère de type PPFS formant la chaîne principale du polymère peigne et pour le ou lesdits polymères polyester/polycarbonate destinés à former les chaînes latérales, s'appliquent également au polymère peigne selon l'invention.

En particulier, le polymère peigne selon l'invention possède de préférence une chaîne principale de type PPFS présentant une masse molaire moyenne en nombre Mₙ supérieure ou égale à 10 000 g.mol⁻¹, en particulier inférieure ou égale à 1 000 000 g.mol⁻¹, notamment inférieure ou égale à 600 000 g.mol⁻¹ et plus particulièrement comprise entre 40 000 g.mol⁻¹ et 400 000 g.mol⁻¹, notamment comprise entre 50 000 g.mol⁻¹ et 100 000 g.mol⁻¹.

Les chaînes latérales de type polycarbonate/polyester présentent plus particulièrement une masse molaire moyenne en nombre strictement supérieure à 2 000 g.mol⁻¹, et en particulier inférieure ou égale à 20 000 g.mol⁻¹, notamment comprise entre 2 500 g.mol⁻¹ et 10 000 g.mol⁻¹ et plus particulièrement entre 3 000 g.mol⁻¹ et 7500 g.mol⁻¹.

Comme indiqué précédemment, les chaînes latérales présentent avantageusement une faible polydispersité. En particulier, l'indice de polydispersité, rapport de la masse molaire moyenne en poids Mw sur la masse molaire moyenne en nombre Mn, est strictement inférieur à 1,2.

Avantageusement, comme indiqué précédemment, le procédé d'obtention d'un polymère peigne selon l'invention permet une grande latitude en termes de variation du taux de greffage des chaînes latérales.

Le taux de greffage molaire des chaînes latérales de type polycarbonate/polyester peut ainsi être supérieur ou égal à 1 % et inférieur ou égal à 100 %, en particulier être compris entre 5 % et 90 %, plus particulièrement entre 5 % et 75 %, voire entre 10 % et 60 %. Dans un mode de réalisation particulier, le taux de greffage peut être strictement supérieur à 35 %, en particulier être compris entre 38 % et 75 % et plus particulièrement entre 40 % et 60 %.

Les chaînes latérales de type polycarbonate/polyester présentent de préférence des fonctions hydroxyles en extrémité de chaîne, sous forme protégée ou coiffée, résultant de la réaction de ladite fonction hydroxyle avec un agent de protection, comme décrit précédemment.

Dans un mode de réalisation particulier, les unités monomériques du polymère peigne selon l'invention porteuses d'une chaîne latérale, en particulier obtenu selon le procédé décrit précédemment, peuvent ainsi être de formule (III) suivante : 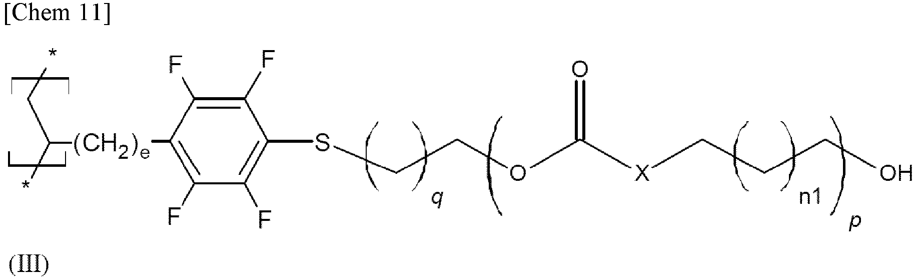 dans laquelle e, q, X, n₁ et p sont tels que définis précédemment, ladite fonction hydroxyle en bout de chaîne pouvant être éventuellement sous forme protégée, par exemple sous la forme -OAc (Ac représentant un groupe acétyle).

Dans un mode de réalisation particulièrement préféré, le polymère peigne comprend des chaînes latérales de même nature, autrement dit résultant du greffage d'un unique polycarbonate/polyester téléchélique au niveau du polymère de type PPFS.

Dans un mode de réalisation particulier, le polymère en peigne obtenu selon l'invention est de formule (IV) : 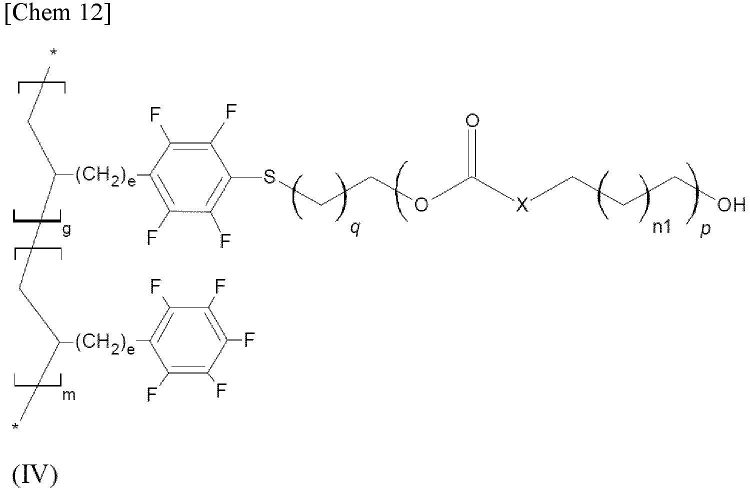
dans laquelle e, p, q, n₁ et X sont tels que définis précédemment ;
lesdites fonctions hydroxyles aux extrémités des chaînes latérales étant éventuellement protégées, comme décrit précédemment ;
g correspond au nombre moyen d'unités monomériques porteuses de chaînes latérales polymériques ;
m correspond au nombre moyen d'unités monomériques non greffées ;
avec g/g+m représentant le taux de greffage molaire en chaînes latérales polymériques, étant en particulier supérieur ou égal à 0,01, notamment compris entre 0,05 et 1, en particulier compris entre 0,05 et 0,75, plus particulièrement strictement supérieur à 0,35 ;
l'ordre de succession des deux types d'unités monomériques formant le polymère de formule (IV) étant totalement aléatoire.

### PREPARATION DE L'ELECTROLYTE SOLIDE

Comme évoqué précédemment, les polymères en peigne selon l'invention, en particulier obtenus par le procédé selon l'invention, de préférence après protection des fonctions hydroxyles aux extrémités des chaînes polycarbonates/polyester latérales, peuvent être mis en œuvre, en combinaison avec au moins un sel ionique, pour former un électrolyte solide, en particulier dans un système électrochimique, notamment dans une batterie au lithium.

L'électrolyte solide peut être un électrolyte polymérique solide (dit encore SPE pour « Solid Polymeric Electrolyte » en terminologie anglo-saxonne) ou un électrolyte solide hybride (HSE pour « Hybrid Solid Electrolyte » en terminologie anglo-saxonne).

L'électrolyte formé selon l'invention peut se présenter sous toute forme appropriée, en particulier sous forme d'un film ou d'une membrane.

En particulier, le réseau polymérique formé des polymères en peigne selon l'invention, en particulier obtenus par le procédé selon l'invention, forme plus de 50 % massique, en particulier plus de 75 % massique, de la masse totale dudit électrolyte solide.

De manière avantageuse, le film d'électrolyte polymérique solide selon l'invention est exempt d'agents plastifiants, tels que des carbonates, par exemple le carbonate d'éthylène ou le carbonate de diéthyle.

En particulier, le film d'électrolyte solide selon l'invention est distinct d'un électrolyte de type gélifié, comprenant une quantité majoritaire de plastifiant.

La préparation d'un électrolyte solide à partir des polymères en peigne selon l'invention met plus particulièrement en œuvre au moins les étapes suivantes :
(a) mélange, en présence ou non d'un milieu solvant, d'au moins :
   - un ou plusieurs polymères en peigne selon l'invention, tel que décrits précédemment, en particulier obtenus par le procédé selon l'invention,
   - au moins un sel de métal alcalin ou alcalino-terreux, en particulier un sel de lithium ; et
   - éventuellement, notamment dans le cas de la préparation d'un HSE, au moins une charge inorganique ;
(b) formation, en particulier en surface d'un substrat, d'un électrolyte solide à partir dudit mélange.

Le sel de métal alcalin ou alcalino-terreux est mis en œuvre avec le polymère en peigne selon l'invention pour assurer la conduction des ions.

Dans le cadre de l'invention, on entend par :
- « métaux alcalins », les éléments chimiques de la première colonne du tableau périodique des éléments, et plus particulièrement choisis parmi le lithium, le sodium, le potassium, le rubidium, le césium. De préférence, le métal alcalin est le lithium, le sodium ou le potassium, et plus préférentiellement le lithium ;
- « métaux alcalino-terreux », les éléments chimiques de la deuxième colonne du tableau périodique des éléments, et plus particulièrement choisis parmi le béryllium, le magnésium, le calcium, le strontium, le baryum, le radium. De préférence, le métal alcalino-terreux est le magnésium ou le calcium.

Le sel d'un métal alcalin peut être par exemple un sel de lithium ou un sel de sodium ; le sel d'un métal alcalinoterreux peut être par exemple un sel de magnésium.

A titre d'exemples de sel de lithium, on peut citer le LiPF₆, LiClO₄, LiBF₄, LiAsF₆, LiCF₃SO₃, LiN(C₂F₅SO₂)₂, le bistrifluorométhylsulfonylimide de lithium LiN[SO₂CF₃]₂ (connu sous l'abréviation LiTFSI), le bis(fluorosulfonyl)amidure de lithium (connu sous l'abréviation LiFSI) LiN[SO₂F]₂, le lithium 4,5-dicyano-2-(trifluoromethyl)imidazole (connu sous l'abréviation LiTDI), le lithium bispentafluoroéthylsulfonylimide (connu sous l'abréviation LiBETI), le lithium bis(oxalato)borate (connu sous l'abréviation LiBOB) et le lithium difluoro(oxalato)borate (connu sous l'abréviation LiFOB) et les mélanges de ceux-ci.

De préférence, l'électrolyte comporte, comme sel de lithium, du LiTFSI ou LiFSI, de préférence du LiTFSI.

Il appartient à l'homme du métier d'ajuster la quantité en sels de métal alcalin ou alcalino-terreux, notamment au regard de la nature du polymère en peigne, et notamment de la nature des chaînes polycarbonates/polyesters latérales portées par le polymère en peigne, mis en œuvre selon l'invention.

Selon un mode de réalisation particulier, les quantités en polymère(s) peigne et en sel(s) de lithium sont ajustées de sorte que le ratio molaire entre les groupes carbonyle des chaînes latérales polycarbonates/polyesters (autrement dit des groupes CO₃ dans le cas de chaînes polycarbonates, et des groupes CO₂ dans le cas de chaînes polyesters) par rapport au lithium, noté [CO]/[Li⁺], soit compris entre 0,1 et 30, en particulier entre 0,5 et 20 et plus particulièrement entre 5 et 15.

Selon une première variante de réalisation, le ou lesdits polymères en peigne selon l'invention sont mis en œuvre pour former un électrolyte polymérique solide (SPE), la préparation dudit électrolyte comprenant le mélange d'au moins un polymère en peigne selon l'invention et dont les fonctions hydroxyles terminales sont éventuellement protégées, et d'au moins un sel de métal alcalin ou alcalino-terreux, par exemple d'un sel de lithium.

Selon une autre variante de réalisation, le ou lesdits polymères en peigne selon l'invention sont mis en œuvre pour former un électrolyte solide hybride (HSE), la préparation dudit électrolyte comprenant alors le mélange d'au moins un polymère en peigne selon l'invention et dont les fonctions hydroxyles terminales sont protégées, d'au moins un sel de métal alcalin ou alcalino-terreux, par exemple d'un sel de lithium et, en outre, d'au moins une charge inorganique.

Les charges inorganiques peuvent être choisies parmi des charges inorganiques conductrice du ou des cations alcalin ou alcalino-terreux, en particulier conductrice d'ions lithium, des charges non conductrices du ou des cations alcalin ou alcalino-terreux, et leurs mélanges.

Les charges conductrices d'ions lithium peuvent être par exemple choisies parmi les oxydes lithiés, tels que Li₇La₃Zr₂O₁₂ (LLZO) et Li_{0.33}La_{0.56}TiO₃ (LLTO), Li₁₃Al_{0.3}Ti_{1.7}(PO₄)₃ (LATP), etc.

Il peut encore s'agir de charges choisies parmi :
- les grenats, par exemple choisis parmi le Li₇La₃Zr₂O₁₂, le Li₆La₂BaTa₂O₁₂, etc. ;
- les phosphates lithiés, par exemple choisis parmi le Li₃PO₄, le LiPO₃, etc. ;
- les borates lithiés, par exemple choisi parmi le Li₃BO₃, etc. ;
- les oxynitrures, par exemple choisis parmi Li₃PO₄₋ₓN_{2x/3}, Li₄SiO₄₋ₓN_{2x/3}, Li₄GeO₄₋ₓN_{2x/3} avec 0<x<4 ou Li₃BO₃₋ₓN_{2x/3} avec 0<x<3 ;
- les composés lithiés à base d'oxynitrure de lithium et de phosphore (appelés LiPON) ;
- les silicates, par exemple Li₂Si₂O₅ ;
- les sulfurés, par exemple l'argyrodite.

Les charges non conductrices de cations alcalin ou alcalino-terreux peuvent par exemple être choisies parmi l'alumine (Al₂O₃), la silice (SiO₂), le dioxyde de titane (TiO₂) etc.

La ou lesdites charges inorganiques peuvent être mises en œuvre dans un rapport volumique charge(s)/polymère(s) peigne compris entre 1/99 et 80/20, en particulier entre 20/80 et 80/20, plus particulièrement entre 20/80 et 60/40.

Le mélange du ou desdits polymères en peigne selon l'invention, du ou desdits sels de métal alcalin ou alcalino-terreux et, éventuellement, de la ou desdits charges inorganiques, est plus particulièrement opéré dans des conditions permettant une bonne dispersion desdits sels de métal alcalin ou alcalino-terreux et, éventuellement, de la ou desdits charges inorganiques, au niveau des polymères en peigne selon l'invention. Le mélange peut être opéré en présence ou non d'un solvant.

La préparation d'un film d'électrolyte solide selon l'invention peut ainsi être opérée soit par la voie utilisant un milieu solvant (dite « voie solvant »), soit par la voie mettant en œuvre le polymère à l'état fondu, en l'absence de solvant (dite « voie sèche » ou « voie fondue »). Selon une première variante de réalisation, le film d'électrolyte solide est préparé par voie « solvant ». Dans le cadre de cette variante, le mélange du ou desdits polymères en peigne selon l'invention, du ou desdits sels de métal alcalin ou alcalino-terreux et, éventuellement, de la ou desdits charges inorganiques, est plus particulièrement réalisé dans un milieu solvant. Le milieu solvant peut être formé d'un ou plusieurs solvants organiques polaires. A titre d'exemples, ils peuvent être choisis parmi l'acétone, le tétrahydrofurane (THF), l'acétonitrile et leurs mélanges.

De préférence, le mélange est chauffé à une température inférieure à 100°C. En particulier, le mélange est opéré à une température supérieure ou égale à 25 °C, en particulier comprise entre 40 et 60 °C.

L'électrolyte solide peut être formé par dépôt dudit mélange en surface d'un substrat, par exemple par enduction, suivi de l'évaporation du ou desdits solvants, en particulier pour obtenir un électrolyte ou film « sec ».

En particulier, le ou lesdits solvants peuvent être évaporés sous vide à une température comprise entre 70°C et 90°C, notamment d'environ 80°C.

Par « sec », on entend signifier que l'électrolyte solide ou film d'électrolyte solide comprend moins de 0,1 % massique de solvant, en particulier moins de 0,05 % massique et plus particulièrement moins de 0,02 % massique de solvant.

Selon une autre variante de réalisation, l'électrolyte solide, en particulier sous la forme d'un film, est préparé en l'absence de solvant, par voie « fondue », notamment par extrusion.

Dans le cadre de cette variante de réalisation, le mélange à l'état fondu peut être plus particulièrement opéré par chauffage à une température supérieure à Tg + 30°C, où Tg est la température de transition vitreuse du polymère en peigne. En particulier, le mélange est opéré à une température supérieure ou égale à - 0 °C, en particulier comprise entre 20°C et 80 °C.

Le mélange à l'état fondu peut ensuite être mis sous la forme d'un film, supporté par un substrat ou autosupporté, par toute technique d'extrusion par voie fondue connue de l'homme du métier.

Comme évoqué précédemment, l'électrolyte solide peut être préparé sous la forme d'un film ou d'une membrane d'électrolyte directement en surface d'un substrat adapté, en particulier inerte.

Le substrat peut être de diverses natures. Il peut être en verre, en alumine, en silicone, en polyimide, en polytétrafluoroéthylène (PTFE), en polytéréphtalate d'éthylène (PET), en silicone, en polypropylène ou encore en acier inoxydable.

Le film d'électrolyte solide peut être éventuellement désolidarisé du substrat pour être mis en œuvre au niveau du système électrochimique auquel il est destiné, en particulier transféré sur au moins une électrode.

Le film d'électrolyte solide peut présenter par exemple une épaisseur comprise entre 20 et 500 µm, en particulier entre 20 et 100 µm et plus particulièrement entre 40 et 60 µm.

### SYSTEME ELECTROCHIMIQUE

L'électrolyte solide obtenu selon l'invention, notamment de type SPE ou HSE, peut être avantageusement mis en œuvre comme électrolyte solide dans un système électrochimique. L'invention concerne encore, selon un autre de ses aspects, un système électrochimique comprenant un électrolyte solide, en particulier un film d'électrolyte solide selon l'invention, en particulier faisant office à la fois de conducteur ionique et séparateur entre les électrodes positive et négative.

Le système électrochimique peut être un système générateur, convertisseur ou de stockage électrochimique. Il peut s'agir plus particulièrement d'une pile à combustible, par exemple une batterie primaire ou secondaire, par exemple une batterie au lithium, sodium, magnésium, potassium ou calcium ; d'une batterie à flux (« redox flow battery » en terminologie anglo-saxonne) ; d'un accumulateur lithium-air, lithium-soufre.

Selon un mode de réalisation particulier, l'électrolyte solide est mis en œuvre dans une batterie rechargeable, en particulier dans une batterie au lithium, notamment une batterie lithium-ion ou lithium-métal.

L'électrolyte solide selon l'invention peut être plus particulièrement mis en œuvre comme électrolyte séparateur au sein d'un système électrochimique. On entend par « électrolyte séparateur », un film d'électrolyte solide positionné entre les électrodes positive et négative d'un système électrochimique, et agissant à la fois comme conducteur ionique et séparateur entre les électrodes positive et négative.

En particulier, l'invention concerne encore, selon un autre de ses aspects, un ensemble électrode/membrane électrolytique, comprenant une membrane d'électrolyte solide selon l'invention.

Un système électrochimique selon l'invention comporte, d'une manière générale, au moins une électrode positive et une électrode négative entre lesquelles se trouve un film d'électrolyte solide agissant à la fois comme conducteur ionique et séparateur entre les électrodes positive et négative.

L'électrode positive d'une batterie au lithium comprend généralement, en tant que matière électrochimiquement active, des composés lamellaires, tels que LiCoO₂, LiNiO₂ et mixtes Li(Ni, Co, Mn, Al)O₂, ou des composés de structure spinelle de compositions proches de LiMn₂O₄, des phosphates du lithium, en particulier LiMnFePO₄ ou LiFePO₄.

De manière avantageuse, l'électrode positive comprend, en tant que matière électrochimiquement active, du LiNi_{1/3}Mn_{1/3}Co_{1/3}O₂ (cathodes NCM) ou du LiCoO₂, de préférence du LiNi_{1/3}Mn_{1/3}CO_{1/3}O₂.

L'électrode négative comprend généralement, en tant que matière électrochimiquement active, du lithium métal ou alliage à base de lithium dans le cas des accumulateurs primaires, ou des matériaux d'intercalation tels que le carbone graphite, ou de l'oxyde de titane lithié (Li₄Ti₅O₁₂) ou de l'oxyde de titane et de niobium (TiNb₂O₇), dans le cas des accumulateurs basés sur la technologie lithium-ion.

De manière avantageuse, il peut s'agir d'une batterie lithium-métal, comprenant une électrode en lithium métallique Li⁰ et une électrode comprenant du LiNi_{1/3}Mn_{1/3}Co_{1/3}O₂ ou du LiCoO₂, de préférence du LiNi_{1/3}Mn_{1/3}Co_{1/3}O₂.

L'invention va maintenant être décrite au moyen des exemples et figures suivants, donnés bien entendu à titre illustratif et non limitatif de l'invention.

### Exemple 1

### Préparation d'un poly(2,3,4,5,6-pentafluorostyrène) (PPFS) destiné à former la chaîne principale d'un polymère peigne selon l'invention

### 1.1 Synthèse d'un PPFS par polymérisation en masse sous catalyse Ziegler Natta ("PPFS-03")

### Préparation d'une solution de catalyseur Ziegler Natta :

Dans une boîte à gants, 1,2 mL de TiCl₄ (1 équivalent) et 15 mL de toluène anhydre sont ajoutés à un ballon bicol de 100 mL, surmonté d'une ampoule de coulée. 1,9 mL d'AlEt₃ (1,2 équivalent) et 15 mL de toluène sont ajoutés dans l'ampoule d'addition. Le montage est sorti de la boîte à gants et le fond du ballon bicol est plongé dans un bain de glace ; la solution d'AlEt₃ est ajoutée goutte à goutte à la solution de TiCl₄, sous agitation vigoureuse. Le bain de glace est retiré à la fin de l'ajout et le milieu réactionnel est maintenu sous agitation pendant 30 min à température ambiante. La solution de catalyseur Ziegler Natta est prête à l'emploi.

### Polymérisation du PPFS :

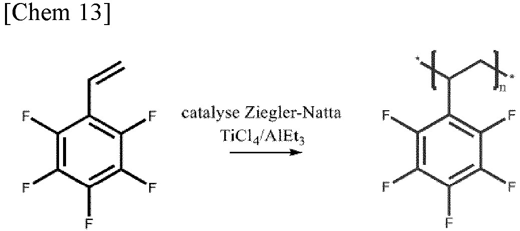

75 mL de 2,3,4,5,6-pentafluorostyrène (PFS ; 50 équivalents) sont introduits dans un ballon bicol de 500 mL. Le montage est mis sous flux d'Argon. 25 mL de solution de catalyseur Ziegler Natta sont ajoutés dans le ballon bicol. Le milieu réactionnel est mis sous agitation et chauffé à 70°C pendant 4h, puis à 120°C pendant 36h. En fin de polymérisation, un solide noir est obtenu dans le fond du ballon.

Le solide est solubilisé dans du fluorobenzène puis le poly(2,3,4,5,6-pentafluorostyrène) (PPFS) synthétisé est purifié par précipitation dans le MeOH. Après filtration, le PPFS (poudre blanche) est séché sous vide à 60°C pendant 48h.

69,8 g de PPFS, nommé "PPFS-03", sont obtenus avec un rendement massique d'environ 93%.

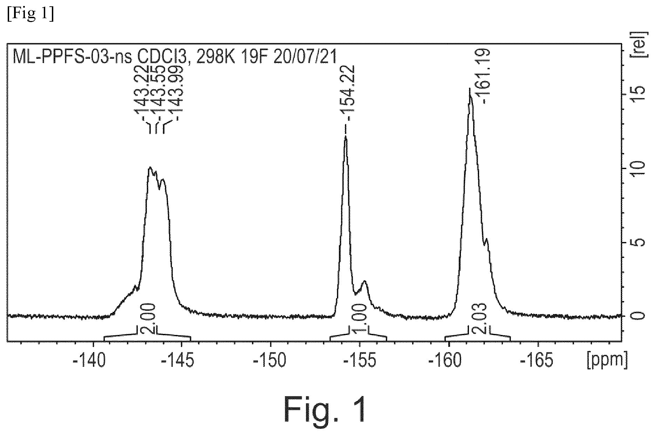

Le polymère obtenu est caractérisé par résonance magnétique nucléaire (RMN) de ¹H et ¹⁹F (figure 1) :
RMN ¹⁹F (400 MHz ; CDCl₃; 298 K) : δ ppm : -143ppm (m, 2F *orto*) ; -154ppm (s, 1F *para*) ; -161ppm (s, *meta*)*.*

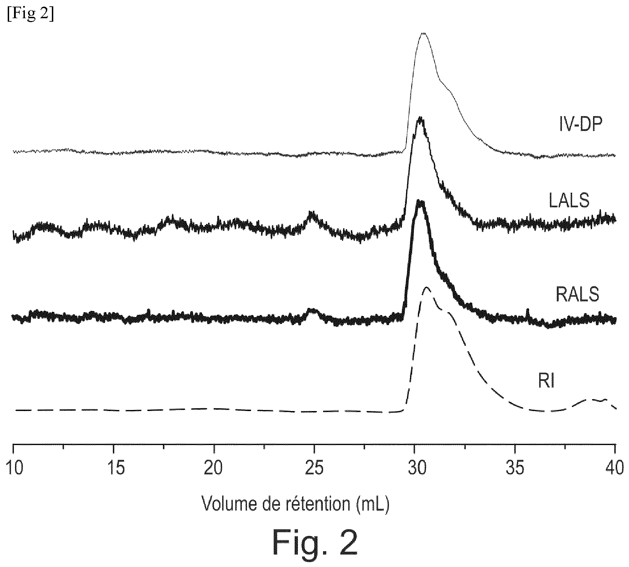

La masse molaire moyenne en nombre Mn, déterminée par Chromatographie d'Exclusion Stérique (CES (THF, 30°C, calibration TDS)) (figure 2) est de 53 kg/mol avec un indice de polydispersité, IP = M_{w}/Mₙ, de 2,2.

### 1.2 Synthèse d'un PPFS par polymérisation radicalaire par émulsion ("PPFS-Em-01")

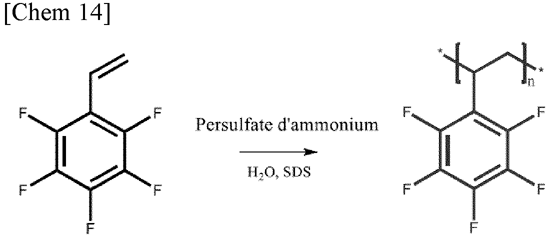

30 mL d'eau distillée et 0,3 g de SDS (dodécylsulfate de sodium, 2% en masse du PFS) sont introduits dans un mini-réacteur. Le milieu est mis sous agitation et chauffé à 75°C pendant 30 min. 15 g de PFS sont introduits dans le réacteur. 15 min après l'ajout, 0,17 g de persulfate d'ammonium (1,1% en masse du PFS), solubilisé dans 15 mL d'eau distillée, sont ajoutés au mini-réacteur. Le milieu est gardé sous agitation et chauffé à 75°C pendant 3h puis à 85°C pendant 1h. Un latex blanc est obtenu.

Le latex est précipité dans l'éthanol puis filtré. Le produite est séché à 60°C sous vide pendant 48h.

10,8 g de PPFS, nommé PPFS-Em-01, sont obtenus avec un rendement massique d'environ 72%.

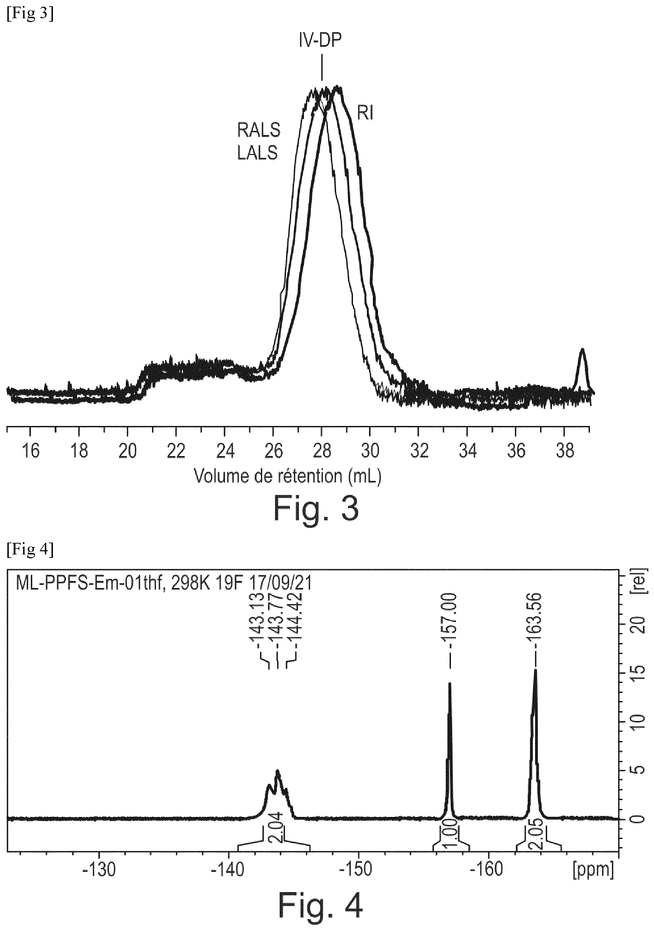

La masse molaire moyenne en nombre Mn déterminée par CES (THF, 30°C, calibration TDS) (figure 3) est de 280 kg/mol avec un indice de polydispersité, IP = M_{w}/Mₙ, de 1,9.

Le polymère est également caractérisé par résonance magnétique nucléaire (RMN) de ¹H et ¹⁹F (figure 4).

### Exemple 2

### Préparation d'un poly(triméthylène carbonate) (PTMC) téléchélique destiné à former les chaînes latérale d'un polymère peigne selon l'invention

### 2.1. Synthèse d'un PTMC téléchélique ("SH-PTMC-OH-01")

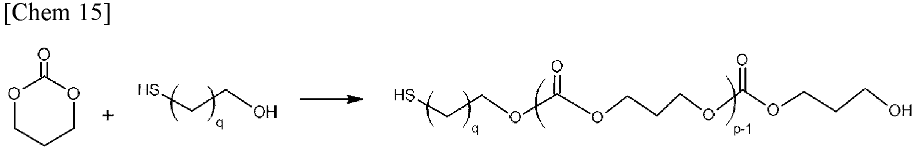

150 g de triméthylène carbonate (TMC ; 50 équivalents) sont introduits dans un ballon bicol contenant un agitateur magnétique. Le ballon bicol est fixé sur un réfrigérant. Le montage est mis sous vide puis sous flux d'argon. 1,4 L de toluène anhydre sont ajoutés afin de solubiliser le TMC. 7,35 g de diphényl phosphate (DPP) (1 équivalent) sont pesés dans un ballon puis solubilisés dans 100 mL de toluène anhydre. La solution de DPP dans le toluène est ajoutée au ballon bicol de réaction. 3,95 mL (1 équivalent) de 6-mercaptohexan-1-ol sont ensuite ajoutés au milieu réactionnel. Le milieu réactionnel est maintenu sous agitation à température ambiante pendant 30h. Après ce temps, 3,1 mL (1,05 équivalent) de triéthylamine (TEA) sont ajoutés au milieu réactionnel pour stopper la polymérisation. Le milieu réactionnel est concentré, puis précipité dans le méthanol (MeOH). Le produit, sous la forme d'un polymère visqueux, est récupéré et séché à 60°C pendant 48h.

Environ 140 g de PTMC, nommé "SH-PTMC-OH-01", sont obtenus avec un rendement massique de 90 %.

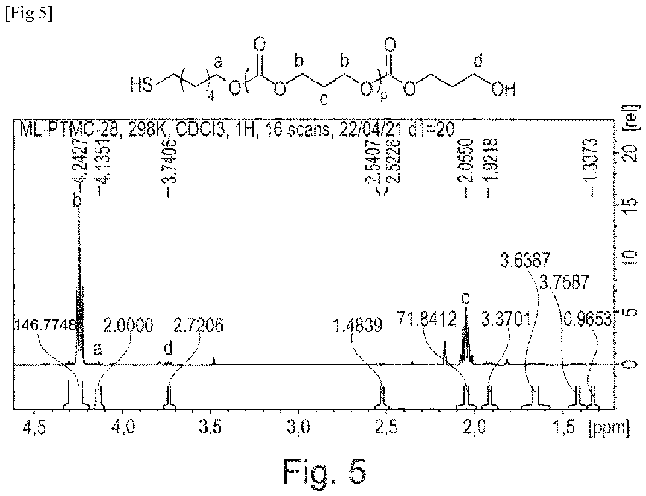

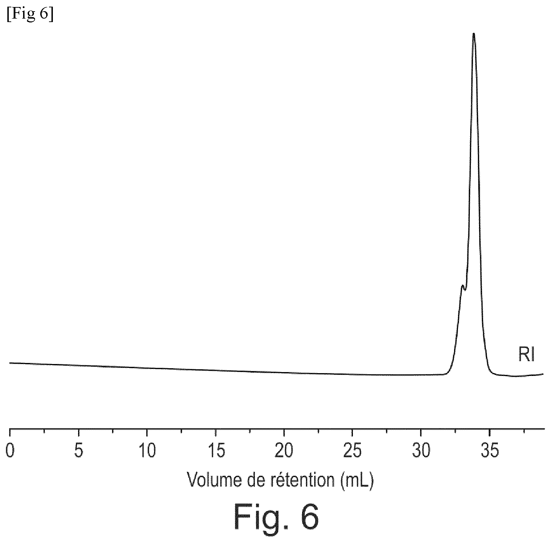

Le polymère est caractérisé par résonance magnétique nucléaire (RMN) de ¹H (figure 5) :
RMN ¹H (400 MHz ; CDCl3; 298 K) : δ ppm 4,25 (t, 2H) ; 4,20(t, 2nx2H) ; 4,09 (t, 2H) ; 3,69 (t, 2H) ; 2,49 (q, 2H) ; 2,01(m, nx2H) ; 1,88(m,4H), 1,64-1,59 (m, 4H) ;1,37-1,3 (m,5H). Il peut être déduit du spectre RMN que le contrôle de la chimioselectivité est tel que 85% des chaînes de PTMC obtenues sont amorcées par le 6-mercaptohexan-1-ol. La masse molaire moyenne en nombre Mn, obtenue à partir de l'analyse RMN ¹H, est de 3700 g/mol. L'indice de polydispersité, déduite de l'analyse CES (THF, 30°C, calibration universelle), IP = M_{w}/Mₙ, est de 1,09 (figure 6).

### 2.2. Synthèse d'un PTMC téléchélique ("SH-PTMC-OH-02")

250 g de TMC (75 équivalents) sont introduits dans un ballon bicol contenant un agitateur magnétique. Le ballon bicol est fixé sur un réfrigérant. Le montage est mis sous vide puis sous flux d'argon. 1,4 L de dichlorométhane (DCM) anhydre sont ajoutés afin de solubiliser le TMC. 8,25 g de diphényl phosphate (DPP) (1 équivalent) sont pesés dans un ballon puis solubilisés dans 100 mL de DCM anhydre. La solution de DPP dans le DCM est ajoutée au ballon bicol de réaction. 4,5 mL (1 équivalent) de 6-mercaptohexan-1-ol sont ensuite ajoutés au milieu réactionnel. Le milieu réactionnel est mis à reflux de DCM (40°C) pendant 30h. Après ce temps, 3,6 mL (1,02 équivalent) de triéthylamine (TEA) sont ajoutés au milieu réactionnel pour stopper la polymérisation. Le milieu réactionnel est concentré, puis précipité dans le méthanol (MeOH). Le produit, sous la forme d'un polymère visqueux, est récupéré et séché à 60°C pendant 48 h.

Environ 231 g de PTMC, nommé "SH-PTMC-OH-02", sont obtenus avec un rendement massique de 92%.

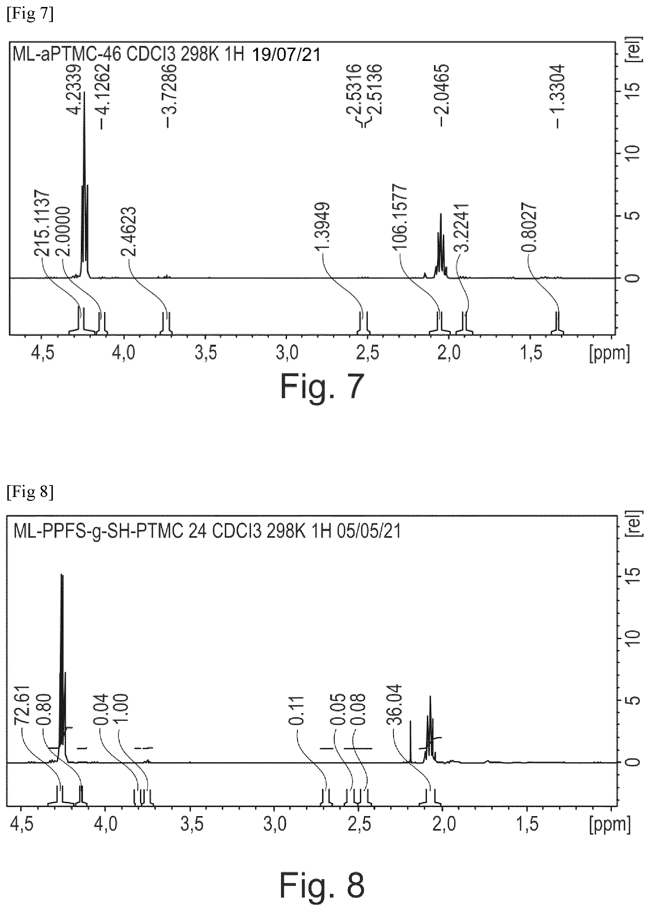

Le polymère est caractérisé par résonance magnétique nucléaire (RMN) de ¹H (figure 7).

Il peut être déduit du spectre RMN (CDCl3, 298K, 400MHz) que le contrôle de la chimioselectivité est tel que 85% des chaînes de PTMC obtenues sont amorcées par le 6-mercaptohexan-1-ol. La masse molaire moyenne en nombre Mn, obtenue à partir de l'analyse RMN ¹H, est de 5500 g/mol.

L'indice de polydispersité, déduite de l'analyse CES (THF, 30°C, calibration universelle), IP = M_{w}/Mₙ, est de 1,1.

### Exemple 3

### Préparation d'un polymère peigne poly(2,3,4,5,6-pentafluorostyrène) porteurs de greffons poly(triméthylène carbonate) (PPFS-g-S-PTMC)

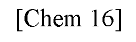

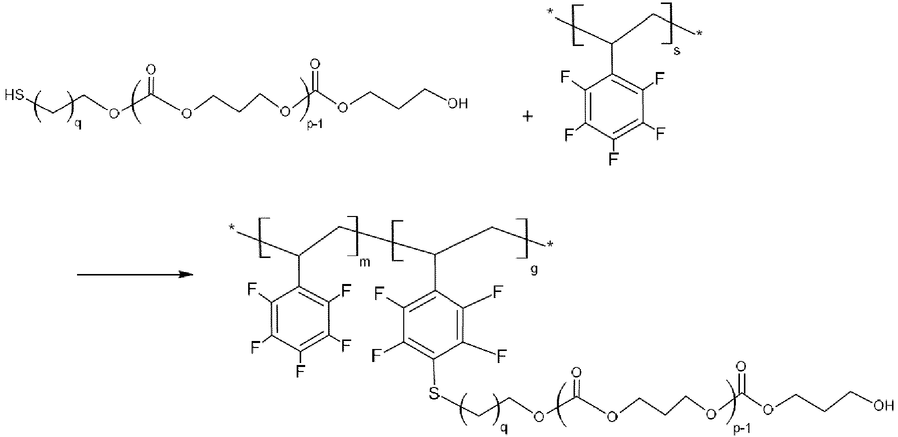

### 3.1. Synthèse d'un copolymère peigne PPFS-g_{0,5}-S-PTMC₃₇₀₀-OH ("PPFS-g-S-PTMC-OH-01")

Dans un ballon bicol de 2 L, 94 g de SH-PTMC-OH-01 synthétisé en exemple 2.1 (0,75 équivalent ; Mn ≈ 3700 g/mol et 6,9 g de PPFS-03 synthétisé en exemple 1.1 (1 équivalent) sont solubilisés dans 1,1 L de méthyl éthyl cétone (MEK). Après solubilisation du PTMC et du PPFS, 1,6 mL de 1,8-diazabicyclo[5.4.0]undéc-7-ène (DBU ; 0,3 équivalent) est ajouté au milieu. Le milieu réactionnel est mis sous agitation pendant 16h à température ambiante. Après ce temps de réaction, le milieu réactionnel est directement précipité dans de l'éthanol. Un polymère visqueux transparent est obtenu après séchage.

Afin d'éliminer les chaînes de PTMC non greffées sur le PPFS, le produit est solubilisé dans du DCM et précipité dans un mélange acétone/MeOH (60:40). Un polymère visqueux transparent, purifié, est obtenu après séchage. Il est nommé "PPFS-g-S-PTMC-OH-01".

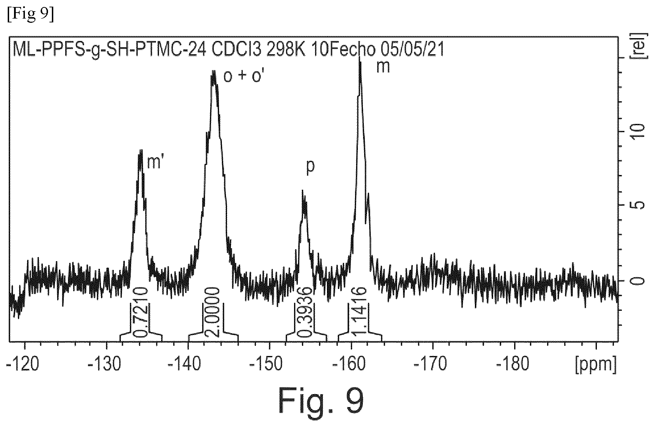

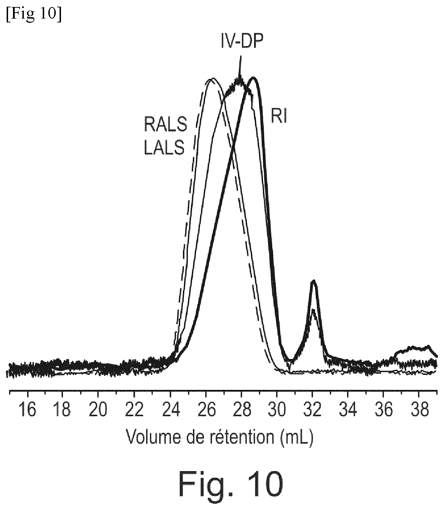

Le polymère obtenu est caractérisé par résonance magnétique nucléaire (RMN) de ¹H (CDCl₃, 298K, 400MHz) (figure 8) et ¹⁹F (CDCl₃, 298K, 400MHz) (figure 9) et par CES (THF, 30°C, calibration TDS)) (figure 10).

L'élimination des chaînes de PTMC non greffées sur le PPFS est confirmée par CES.

Le taux de greffage molaire en chaînes de PTMC sur les unités de répétition de PPFS est estimé par RMN ¹⁹F et/ou CES à 50%.

### 3.2. Synthèse du polymère peigne PPFS-g_{0,1}-S-PTMC₅₅₀₀-OH ("PPFS-g-S-PTMC-OH-02")

Dans un ballon bicol de 2L, 206 g de SH-PTMC-OH-02 synthétisé en exemple 2.2 (0,5 équivalent ; Mn ≈ 5500 g/mol et 11,9 g de PPFS-03 synthétisé en exemple 1.1 (1 équivalent) sont solubilisés dans 1 L de MEK. Après solubilisation du PTMC et du PPFS, 3,9 mL de DBU (0,4 équivalent) est ajouté au milieu. Le milieu réactionnel est mis sous agitation pendant 16h à température ambiante.

Après ce temps de réaction, le milieu réactionnel est directement précipité dans un mélange acétone/MeOH (65:35) pour éliminer les chaînes de PTMC n'ayant pas réagi avec le PPFS. Un polymère visqueux transparent, purifié, est obtenu après séchage. Il est nommé "PPFS-g-S-PTMC-OH-02".

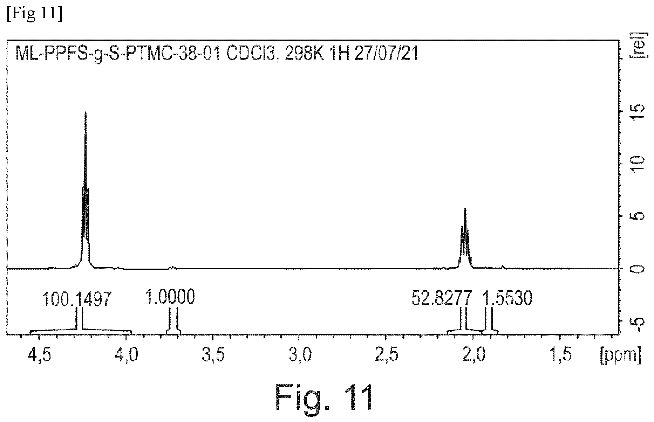

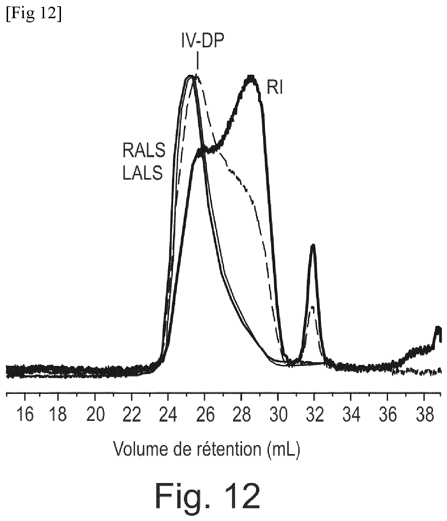

Le polymère obtenu est caractérisé par résonance magnétique nucléaire (RMN) de ¹H (CDCl₃, 298K, 400MHz) (figure 11) et ¹⁹F et par CES (THF, 30°C, calibration TDS)) (figure 12).

L'élimination des chaînes de PTMC non greffées sur le PPFS est confirmée par CES. Il est confirmé par RMN ¹H que la masse molaire des chaînes de PTMC n'est pas modifiée lors du greffage.

Le taux de greffage molaire en chaînes de PTMC sur les unités de répétition de PPFS est estimé par RMN ¹⁹F et/ou CES à 40%.

### 3.3. Protection des extrémités des chaînes latérales (-OH)

Les fonctions hydroxyles des chaînes latérales du copolymère PPFS-g-S-PTMC-OH-01 synthétisé en exemple 3.1 peuvent être protégées, par exemple par un groupement acétyl (Ac) comme suit.

Dans un ballon bicol de 1L, 53,4 g PPFS-g-S-PTMC-OH-01 (1 équivalent) sont solubilisés dans 600 mL de DCM. Ensuite, 18,6 mL de TEA (5 équivalents) sont ajoutés à la solution. Après 10 min d'agitation, 9,4 mL de chlorure d'acétyle sont ajoutés goutte à goutte. Le milieu réactionnel est gardé sous agitation pendant 24h à température ambiante. Après réaction, le milieu réactionnel est précipité dans de l'éthanol.

Après séchage, un polymère visqueux, transparent et jaunâtre est obtenu. Il est nommé "PPFS-g-S-PTMC-OAc-01" ou "PPFS-g_{0,5}-S-PTMC₃₇₀₀-OAc".

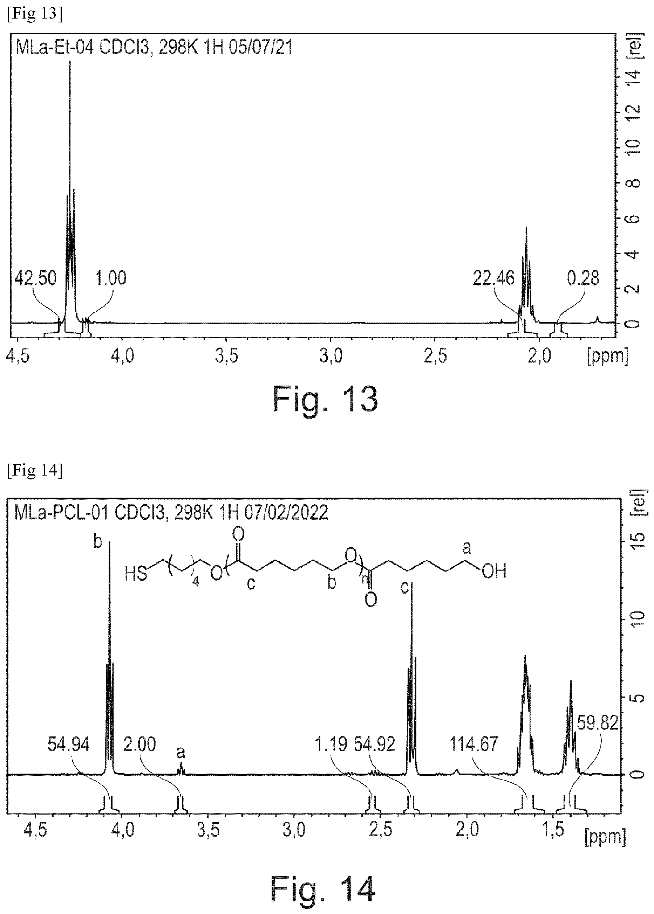

La protection des bouts de chaînes -OH est confirmée par analyse RMN ¹H (CDCl₃, 298K, 400MHz) (figure 13).

Les fonctions hydroxyles de chaînes latérales du copolymère PPFS-g-S-PTMC-OH-02 synthétisé en exemple 3.2 peuvent également être protégées selon le même protocole. Le polymère obtenu est nommé "PPFS-g-S-PTMC-OAc-02" ou " PPFS-g_{0,4}-S-PTMC₅₅₀₀-OAc".

### Exemple 4

### Préparation d'un polymère peigne poly(2,3,4,5,6-pentafluorostyrène) porteurs de greffons poly(ε-caprolactone) (PPFS-g-S-PCL)

### 4.1 Préparation d'un poly(ε-caprolactone) (PCL) téléchélique ("SH-PCL-OH-01")

0,55 g de diphényl phosphate (0,5 équivalent) sont introduits dans un ballon bicol contenant un agitateur magnétique. Le ballon bicol est fixé sur un réfrigérant. Le montage est mis sous vide puis sous flux d'argon. 15 mL (30 équivalents) de ε-Caprolactone (ε-CL) ainsi que 60 mL de toluène anhydre sont ajoutés. Après quelques minutes d'agitation, 0,6 mL (1 équivalent) de mercapto hexan-1-ol est ajouté au milieu réactionnel. Le milieu réactionnel est chauffé à 50°C pendant 90 min. Après ce temps, 0,48 mL (1,02 équivalent) de triéthylamine (TEA) est ajouté au milieu réactionnel pour stopper la polymérisation. Le milieu réactionnel est concentré, puis précipité dans le méthanol (MeOH). Le produit, sous la forme d'un polymère semi-cristallin blanc, est récupéré par filtration et séché sous vide pendant 48 h. Ce produit est nommé "SH-PCL-OH-01".

Le polymère est caractérisé par résonance magnétique nucléaire (RMN) de ¹H (figure 14). Il est également caractérisé par CES (THF, 30°C, calibration universelle).

Il est déduit que la masse molaire du polymère synthétisé est d'environ 3000 g/mol.

### 4.2 Préparation d'un polymère peigne PPFS porteurs de greffons poly(ε-caprolactone) (PPFS-g-S-PCL) PPFS-g-S-PCL₃₀₀₀-OH ("PPFS-g-S-PCL-OH-01")

1,3 g de SH-PCL-OH-01 synthétisé en exemple 4.1 (1,5 équivalent) et 0,051 g de PPFS-03 synthétisé en exemple 1.1 (1 équivalent) sont introduits dans un ballon bicol de 50 mL. 15 mL de MEK sont utilisés afin de solubiliser les réactifs. Après solubilisation, 0,025 mL de DBU est ajouté au milieu réactionnel. Le milieu réactionnel est maintenu sous agitation pendant 20h à température ambiante.

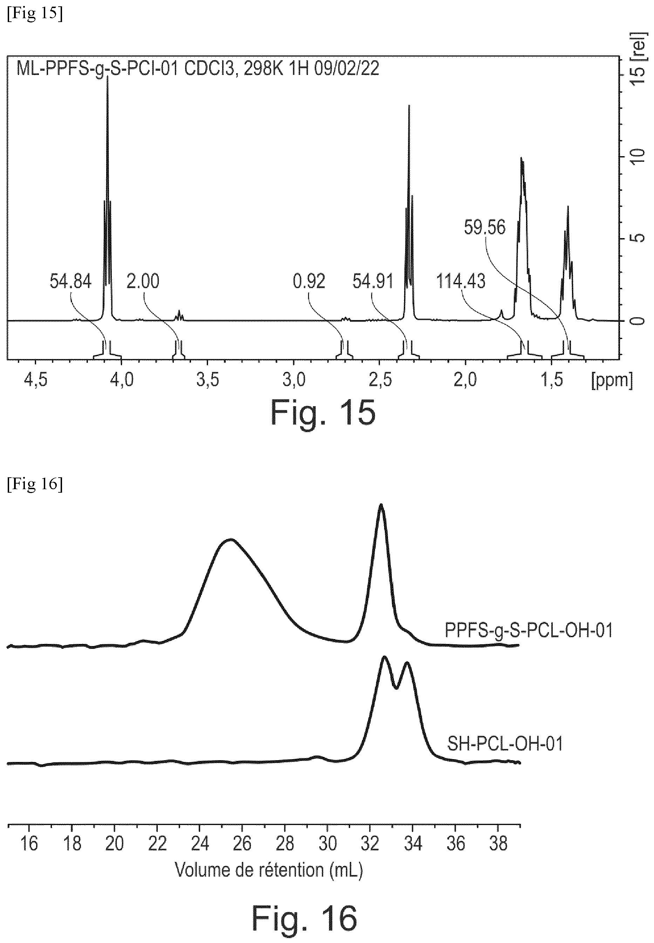

Après ce temps de réaction, le milieu réactionnel est directement précipité dans du MeOH froid. Le produit, sous la forme d'un polymère semi-cristallin blanc, est obtenu après filtration et séché sous vide pendant 48h. Ce produit est nommé "PPFS-g-S-PCL-OH-01". Le polymère obtenu est caractérisé par résonance magnétique nucléaire (RMN) de ¹H (CDCl₃, 298K, 400MHz) (figure 15) et ¹⁹F (CDCl₃, 298K, 400MHz) et par CES (THF, 30°C, calibration TDS)) (figure 16).

La formation du polymère peigne est confirmée par l'analyse CES.

### Exemple 5

### Préparation d'électrolytes et propriétés électrochimiques

Le polymère peigne "PPFS-g-S-PTMC-OAc-01",synthétisé en exemples 3.1 et 3.3 (762 mg), est mélangé avec du sel de lithium LiTFSI (112,5 mg) dans du THF à 56°C.

Après évaporation du solvant, l'électrolyte est séché sous vide à 80°C. L'électrolyte solide est ensuite incorporé au sein d'une pile bouton symétrique cale (acier inoxydable)/ électrolyte/cale (acier inoxydable) pour la détermination de sa conductivité ionique par EIS (« Electrochemical Impedance Spectroscopy »).

Des électrolytes solides sont également préparés et incorporés dans des piles boutons selon un protocole similaire à celui décrit précédemment, à base des polymères peignes suivants :
- polymère peigne PPFS-g_{0,4}-S-PTMC₅₅₀₀-OAc, nommé "PPFS-g-S-PTMC-OAc-02", synthétisé en exemples 3.2 et 3.3 ;
- polymère peigne PPFS-g_{0,2}-S-PTMC₅₀₀₀-OAc, nommé "PPFS-g-S-PTMC-OAc-03", synthétisé selon un protocole similaire à celui décrit en exemples 2 et 3 à partir du de PPFS-03 (exemple 1.1), dont le taux de greffage est de 20%, la masse molaire des chaînes latérales est d'environ 5000 g/mol et les extrémités des chaînes latérales ont été protégées par un groupement acyle ;
- copolymère peigne PPFS-g-S-PCL₃₀₀₀-OH, nommé "PPFS-g-S-PCL-OH-01", et synthétisé en exemple 4, dont la masse molaire des chaînes latérales est d'environ 3000 g/mol et les extrémités des chaînes latérales n'ont pas été protégées.

Dans tous ces électrolytes, les quantités de polymères en peigne et de sel de lithium sont ajustées de manière à ce que le ratio molaire CO₃/Li (dans le cas de greffons PTMC) ou CO₂/Li (dans le cas de greffons PCL) soit de 15.

La figure 18 représente l'évolution de la conductivité ionique des électrolytes polymères formés en fonction de la température et témoigne d'une bonne conductivité ionique.

### Liste des documents cités

[1] Mindemark et al., Progress in Polymer Science, 81:114-43 (2018).
[2] Bocharova et al., Macromolecules, 53:4141-57 (2020).
[3] Bouchet et al., Innovations technologiques (2015).
[4] Li et al., Progress in Polymer Science, 122:101453 (2021).
[5] EP 3 865 533 A1.
[6] EP 3 865 532 A1.
[7] Atanasov et al., Solid State Ionics, 9 (2013).
[8] Hiorns et al.. Polymer, 43:3365-9 (2002).
[9] EP 3 763 748 A1.
[10] Fukushima, Chapter 7, Polymer Chemistry Series, Cambridge: Royal Society of Chemistry (2018).
[11] Makiguchi et al, Macromolecules, 44:1999-2005 (2011).
[12] Makiguchi et al., Macromolecules, 46:1772-82 (2013).
[13] Liu et al.. Polym Chem, 7:5526-35 (2016).
[14] Zhu et al., Polymer, 80:88-94 (2015).
[15] Zhu et al., European Polymer Journal, 80:234-9 (2016).
[16] Zhu et al., Sci Rep, 8:3734 (2018).
[17] Yin, Thiol-para-fluoro modified PPFS as building blocks for the design of silica-based nanocomposite and layer by layer self-assembled thin films (2018).
[18] Yin, European Polymer Journal, 10 (2018).

## Revendications

1. Procédé de préparation d'un polymère en peigne comprenant au moins les étapes consistant en :
(i) disposer d'un polymère formé à partir de monomères 1-éthényl- et/ou 1-allyl- 2,3,4,5,6-pentafluorobenzène, dit « polymère de type PPFS », destiné à former la chaîne principale du polymère en peigne ;
(ii) disposer d'au moins un polymère, dit « polycarbonate/polyester téléchélique », destiné à former des chaînes latérales dudit polymère en peigne, ledit polymère étant formé à partir d'au moins un monomère cyclique de cinq à huit chaînons choisi parmi les lactones et les carbonates cycliques, et présentant au moins une fonction hydroxyle à l'une de ses extrémités, et une fonction thiol libre ; et
(iii) procéder au greffage dudit polycarbonate/polyester téléchélique, en position *para* d'une partie des groupements pentafluorophényle des unités monomériques du polymère de type PPFS, ledit greffage faisant intervenir une réaction de substitution nucléophile entre la fonction thiol portée par le polycarbonate/polyester téléchélique et l'atome de fluor en position *para* du groupement pentafluorophényle.

2. Procédé selon la revendication précédente, dans lequel ladite réaction de substitution nucléophile pour le greffage desdits polycarbonates/polyesters téléchéliques en étape (iii) est opérée en présence d'une base aprotique plus faible que l'hydrure de sodium, l'hydroxyde de sodium et l'hydroxyde de potassium, de préférence en présence d'une base aprotique présentant un pKa strictement inférieur à 15 et strictement supérieur à 10, en particulier strictement inférieur à 14, plus particulièrement inférieur ou égal à 13, voire compris entre 10,2 et 13, tels que le 1,8-diazabicyclo[5.4.0]undéc-7-ène (DBU) ou la triéthylamine (TEA).

3. Procédé selon la revendication 1 ou 2, dans lequel ledit polymère de type PPFS est un poly(2,3,4,5,6-pentafluorostyrène).

4. Procédé selon l'une quelconque des revendications précédentes, dans lequel ledit polymère de type PPFS présente une masse molaire moyenne en nombre Mₙ, déterminée par chromatographie d'exclusion stérique, supérieure ou égale à 10 000 g.mol⁻¹, en particulier comprise entre 10 000 g.mol⁻¹ et 1 000 000 g.mol⁻¹, en particulier entre 40 000 g.mol⁻¹ et 600 000 g.mol⁻¹, plus particulièrement comprise entre 40 000 g.mol⁻¹ et 400 000 g.mol⁻¹.

5. Procédé selon l'une quelconque des revendications précédentes, dans lequel ledit polycarbonate/polyester téléchélique est formé à partir d'un ou plusieurs monomères choisis parmi le triméthylène carbonate et la ε-caprolactone, en particulier est un poly(triméthylène carbonate) (PTMC) ou poly(ε-caprolactone) (PCL) présentant à l'une de ses extrémités une fonction thiol libre et à l'autre de ses extrémités au moins une fonction hydroxyle, de préférence une seule fonction hydroxyle.

6. Procédé selon l'une quelconque des revendications précédentes, dans lequel lesdits polycarbonates/polyesters téléchéliques mis en œuvre en étape (ii) sont préalablement obtenus en une seule étape par polymérisation par ouverture de cycle du ou desdits monomères cycliques, en présence d'au moins un amorceur qui est un mono ou poly-alcool, en particulier monoalcool, porteur d'une fonction thiol libre, en particulier un mercapto-alcanol, par exemple le 6-mercaptohexan-1-ol ; et d'un catalyseur, de préférence un catalyseur organique et plus préférentiellement choisi parmi le diphényl phosphate (DPP) et le 1,1' binaphtyl 2,2'diyl hydrogen phosphate (BNPH).

7. Procédé selon l'une quelconque des revendications précédentes, dans lequel lesdits polycarbonates/polyesters téléchéliques présentent un indice de polydispersité, défini comme le rapport de la masse molaire moyenne en poids Mw sur la masse molaire moyenne en nombre Mn, déterminées par chromatographie d'exclusion stérique, strictement inférieur à 1,2, de préférence compris entre 1 et 1,1.

8. Procédé selon l'une quelconque des revendications précédentes, dans lequel lesdits polycarbonates/polyesters téléchéliques présentent une masse molaire moyenne en nombre, déterminée par analyse RMN ¹H, strictement supérieure à 2 000 g.mol⁻¹, notamment comprise entre 2 000 g.mol⁻¹ et 20 000 g.mol⁻¹, en particulier comprise entre 2 500 g.mol⁻¹ et 10 000 g.mol⁻¹ et plus particulièrement entre 3 000 g.mol⁻¹ et 7500 g.mol⁻¹.

9. Procédé selon l'une quelconque des revendications précédentes, dans lequel le ou lesdits polycarbonates/polyesters téléchéliques et ledit polymère de type PPFS sont mis en œuvre en étape (iii) dans un rapport molaire polymères téléchéliques/unités monomériques du polymère de type PPFS compris entre 0,1 et 1.

10. Procédé selon l'une quelconque des revendications précédentes, comprenant en outre au moins une étape de purification du polymère en peigne obtenu à l'issue du greffage (iii), ladite étape de purification étant opérée par solubilisation du polymère obtenu à l'issue de l'étape (iii) dans un solvant organique, par exemple dans du dichlorométhane (DCM), de l'acétone, du tétrahydrofurane (THF), de la méthyléthylcétone (MEK), de la N,N-diméthylformamide (DMF) ou leurs mélanges, de préférence du DCM, puis par précipitation du polymère peigne dans un mélange d'un premier solvant choisi parmi le méthanol, l'éthanol, le diéthyl éther et leurs mélanges et d'un deuxième solvant choisi parmi le DCM, l'acétone, le THF, la MEK, la DMF et leurs mélanges, de préférence dans un mélange acétone/méthanol, suivie d'une séparation liquide/solide, par exemple une filtration, et d'un séchage.

11. Procédé selon l'une quelconque des revendications précédentes, comprenant en outre une étape de protection des fonctions hydroxyles présentes aux extrémités des chaînes polycarbonates/polyesters latérales dudit polymère peigne, par réaction avec au moins un composé, dit agent de protection, choisi parmi les chlorures d'acyle, les anhydrides d'acide et les isocyanates.

12. Polymère en peigne, comprenant une chaîne principale de type PPFS formée à partir de monomères 1-éthényl- et/ou 1-allyl- 2,3,4,5,6-pentafluorobenzène, une partie des unités monomériques de la chaîne principale étant porteuse de chaînes latérales polymériques, dites chaînes polycarbonates/polyesters, formées à partir d'au moins un monomère cyclique de cinq à huit chaînons choisi parmi des lactones et des carbonates cycliques ; lesdites chaînes polymériques latérales étant greffées *en para* des groupes pentafluorophényle par l'intermédiaire de liaisons thioéther.

13. Polymère en peigne selon la revendication précédente, ledit polymère étant obtenu par le procédé défini selon l'une quelconque des revendications 1 à 11.

14. Polymère en peigne selon la revendication 12 ou 13, présentant un taux de greffage en chaînes latérales, déterminé par résonance magnétique nucléaire (RMN) du fluor F¹⁹, supérieur ou égal à 1 % et inférieur ou égal à 100%, de préférence compris entre 5 % et 90 %, en particulier strictement supérieur à 35 %, notamment compris entre 38 % et 75 % et plus particulièrement entre 40 % et 60 %.

15. Electrolyte solide, notamment de type électrolyte polymérique solide (SPE) ou électrolyte solide hybride (HSE), comprenant, voire étant formé de :
- au moins un polymère en peigne tel qu'obtenu selon le procédé de l'une quelconque des revendications 1 à 11 ou tel que défini selon l'une quelconque des revendications 12 à 14, de préférence dont les fonctions hydroxyles aux extrémités des chaînes latérales greffées sont protégées ;
- au moins un sel de métal alcalin ou alcalino-terreux, en particulier un sel de lithium ; et
- éventuellement une ou plusieurs charges inorganiques.

16. Système électrochimique, en particulier un dispositif de stockage de l'énergie, notamment une batterie rechargeable, en particulier une batterie au lithium, comprenant un électrolyte solide, en particulier un film d'électrolyte solide, tel que défini en revendication 15.

## Patentansprüche

1. Verfahren zur Herstellung eines Kammpolymers, das mindestens folgende Schritte umfasst:
i) Bereitstellen eines Polymers, das aus 1-Ethenyl- und/oder 1-Allyl-2,3,4,5,6-pentafluorbenzol-Monomeren gebildet ist, das als "Polymer vom PPFS-Typ" bezeichnet wird und dazu bestimmt ist, die Hauptkette des Kammpolymers zu bilden;
ii) Bereitstellen mindestens eines Polymers, das als "telecheles Polycarbonat/telecheler Polyester" bezeichnet wird und dazu bestimmt ist, Seitenketten des Kammpolymers zu bilden, wobei das Polymer aus mindestens einem fünf- bis achtgliedrigen cyclischen Monomer, das aus Lactonen und cyclischen Carbonaten ausgewählt ist, gebildet ist und mindestens eine Hydroxylfunktion an einem seiner Enden und eine freie Thiolfunktion aufweist; und
iii) Aufpfropfen des telechelen Polycarbonats/Polyesters auf die para-Position eines Teils der Pentafluorphenylgruppen der Monomereinheiten des Polymers vom PPFS-Typ, wobei die Aufpfropfung eine nukleophile Substitutionsreaktion zwischen der Thiolfunktion des telechelen Polycarbonats/Polyesters und dem Fluoratom in der para-Position der Pentafluorphenylgruppe beinhaltet.

2. Verfahren nach dem vorhergehenden Anspruch, bei dem die nucleophile Substitutionsreaktion zum Aufpfropfen der telechelen Polycarbonate/Polyester in Schritt (iii) in Gegenwart einer aprotischen Base, die schwächer als Natriumhydrid, Natriumhydroxid und Kaliumhydroxid ist, vorzugsweise in Gegenwart einer aprotischen Base, die einen pKa-Wert streng kleiner als 15 und streng größer als 10, speziell streng kleiner als 14, spezieller kleiner oder gleich 13 oder sogar zwischen 10,2 und 13 aufweist, wie 1,8-Diazabicyclo[5.4.0]undec-7-en (DBU) oder Triethylamin (TEA), durchgeführt wird.

3. Verfahren nach Anspruch 1 oder 2, wobei es sich bei dem Polymer vom PPFS-Typ um Poly(2,3,4,5,6-pentafluorstyrol) handelt.

4. Verfahren nach einem der vorhergehenden Ansprüche, bei dem das Polymer vom PPFS-Typ eine durch Größenausschlusschromatographie bestimmte zahlenmittlere Molmasse Mₙ größer oder gleich 10.000 g.mol⁻¹, speziell zwischen 10.000 g.mol⁻¹ und 1.000.000 g.mol⁻¹, speziell zwischen 40.000 g.mol⁻¹ und 600.000 g.mol⁻¹, spezieller zwischen 40.000 g.mol⁻¹ und 400.000 g.mol⁻¹, aufweist.

5. Verfahren nach einem der vorhergehenden Ansprüche, bei dem das telechele Polycarbonat/der telechele Polyester aus einem oder mehreren Monomeren gebildet ist, die aus Trimethylencarbonat und ε-Caprolacton ausgewählt sind, und speziell ein Poly(trimethylencarbonat) (PTMC) oder Poly(ε-caprolacton) (PCL) mit einer freien Thiolfunktion an einem seiner Enden und mindestens einer Hydroxylfunktion an dem anderen seiner Enden, vorzugsweise einer einzigen Hydroxylfunktion, ist.

6. Verfahren nach einem der vorhergehenden Ansprüche, bei dem die in Schritt (ii) verwendeten telechelen Polycarbonate/Polyester vorher in einem einzigen Schritt durch Ringöffnungspolymerisation des bzw. der cyclischen Monomere in Gegenwart mindestens eines Initiators, bei dem es sich um einen Mono- oder Polyalkohol, speziell einen Monoalkohol, der eine freie Thiolfunktion trägt, insbesondere ein Mercaptoalkanol, beispielsweise 6-Mercaptohexan-1-ol, handelt, und eines Katalysators, insbesondere eines organischen Katalysators, der vorzugsweise aus Diphenylphosphat (DPP) und 1,1'-Binaphthyl-2,2'-diylhydrogenphosphat (BNPH) ausgewählt wird, erhalten werden.

7. Verfahren nach einem der vorhergehenden Ansprüche, bei dem die telechelen Polycarbonate/Polyester einen Polydispersitätsindex, der als das Verhältnis von gewichtsmittlerer Molmasse Mw zu zahlenmittlerer Molmasse Mn, die durch Größenausschlusschromatographie bestimmt werden, definiert ist, streng kleiner als 1,2, vorzugsweise zwischen 1 und 1,1, aufweisen.

8. Verfahren nach einem der vorhergehenden Ansprüche, bei dem die telechelen Polycarbonate/Polyester eine durch ¹H-NMR-Analyse bestimmte zahlenmittlere Molmasse streng größer als 2000 g.mol⁻¹, insbesondere zwischen 2000 g.mol⁻¹ und 20.000 g.mol⁻¹, speziell zwischen 2500 g.mol⁻¹ und 10.000 g.mol⁻¹ und spezieller zwischen 3000 g.mol⁻¹ und 7500 g.mol⁻¹ aufweisen.

9. Verfahren nach einem der vorhergehenden Ansprüche, bei dem das bzw. die telechelen Polycarbonate/Polyester und das Polymer vom PPFS-Typ in Schritt (iii) in einem molaren Verhältnis telechele Polymere/Monomereinheiten des Polymers vom PPFS-Typ zwischen 0,1 und 1 verwendet werden.

10. Verfahren nach einem der vorhergehenden Ansprüche, das ferner mindestens einen Schritt der Reinigung des am Ende des Aufpfropfens (iii) erhaltenen Kammpolymers umfasst, wobei der Reinigungsschritt durch Solubilisierung des am Ende von Schritt (iii) erhaltenen Polymers in einem organischen Lösungsmittel, beispielsweise in Dichlormethan (DCM), Aceton, Tetrahydrofuran (THF), Methylethylketon (MEK), N,N-Dimethylformamid (DMF) oder Mischungen davon, vorzugsweise DCM, und anschließende Ausfällung des Kammpolymers aus einer Mischung eines ersten Lösungsmittels, das aus Methanol, Ethanol, Diethylether und Mischungen davon ausgewählt wird, und eines zweiten Lösungsmittels, das aus DCM, Aceton, THF, MEK, DMF und Mischungen davon ausgewählt wird, insbesondere in einem Aceton/Methanol-Gemisch, mit nachfolgender Flüssig/Fest-Trennung, beispielsweise einer Filtration, und Trocknung durchgeführt wird.

11. Verfahren nach einem der vorhergehenden Ansprüche, ferner umfassend einen Schritt des Schützens der Hydroxylfunktionen, die an den Enden der Polycarbonat/Polyester-Seitenketten des Kammpolymers vorliegen, durch Umsetzung mit mindestens einer Verbindung, die als Schutzmittel bezeichnet wird und aus Acylchloriden, Säureanhydriden und Isocyanaten ausgewählt wird.

12. Kammpolymer, umfassend eine Hauptkette vom PPFS-Typ, die aus 1-Ethenyl- und/oder 1-Allyl-2,3,4,5,6-pentafluorbenzol-Monomeren gebildet ist, wobei ein Teil der Monomereinheiten der Hauptkette polymere Seitenketten, die als Polycarbonat/Polyester-Ketten bezeichnet werden und ausgehend von mindestens einem fünf- bis achtgliedrigen cyclischen Monomer, das aus Lactonen und cyclischen Carbonaten ausgewählt ist, gebildet werden, trägt; wobei die polymeren Seitenketten in para-Position zu Pentafluorphenylgruppen über Thioetherbindungen aufgepfropft sind.

13. Kammpolymer nach dem vorhergehenden Anspruch, wobei das Polymer durch das Verfahren nach einem der Ansprüche 1 bis 11 erhalten wird.

14. Kammpolymer nach Anspruch 12 oder 13 mit einem durch Kernspinresonanz (NMR) von F¹⁹-Fluor bestimmten Seitenkettenpfropfgrad größer oder gleich 1 und kleiner oder gleich 100 %, vorzugsweise zwischen 5 % und 90 %, speziell streng größer als 35 %, insbesondere zwischen 38 % und 75 % und spezieller zwischen 40 % und 60 %.

15. Festelektrolyt, insbesondere vom Typ fester Polymerelektrolyt (SPE) oder fester Hybridelektrolyt (HSE), umfassend, oder sogar gebildet aus,:
- mindestens ein nach dem Verfahren nach einem der Ansprüche 1 bis 11 gebildetes oder nach einem der Ansprüche 12 bis 14 definiertes Kammpolymer, wobei vorzugsweise die Hydroxylfunktionen an den Enden der aufgepfropften Seitenketten geschützt sind;
- mindestens ein Alkali- oder Erdalkalimetallsalz, speziell ein Lithiumsalz; und
- gegebenenfalls einen oder mehrere anorganische Füllstoffe.

16. Elektrochemisches System, speziell Energiespeicher, insbesondere wiederaufladbare Batterie, insbesondere Lithium-Batterie, umfassend einen wie in Anspruch 15 definierten Festelektrolyt, speziell einen Festelektrolytfilm.

## Claims

1. Process for preparing a comb polymer comprising at least the steps consisting in:
(i) providing a polymer formed from 1-ethenyl- and/or 1-allyl-2,3,4,5,6-pentafluorobenzene monomers, referred to as "PPFS-type polymer", which is intended to form the main chain of the comb polymer;
(ii) providing at least one polymer, referred to as "telechelic polycarbonate/polyester", which is intended to form side chains of said comb polymer, said polymer being formed from at least one five- to eight-membered cyclic monomer chosen from lactones and cyclic carbonates, and having at least one hydroxyl function at one of its ends, and a free thiol function; and
(iii) grafting said telechelic polycarbonate/polyester, in the para position of a portion of the pentafluorophenyl groups of the monomer units of the PPFS-type polymer, said grafting involving a nucleophilic substitution reaction between the thiol function borne by the telechelic polycarbonate/polyester and the fluorine atom at the para position of the pentafluorophenyl group.

2. Process according to the preceding claim, wherein said nucleophilic substitution reaction for grafting said telechelic polycarbonates/polyesters in step (iii) is performed in the presence of an aprotic base that is weaker than sodium hydride, sodium hydroxide and potassium hydroxide, preferably in the presence of an aprotic base having a pKa of strictly less than 15 and strictly greater than 10, in particular strictly less than 14, more particularly less than or equal to 13, or even between 10.2 and 13, such as 1,8-diazabicyclo[5.4.0]undec-7-ene (DBU) or triethylamine (TEA).

3. Process according to Claim 1 or 2, wherein said PPFS-type polymer is a poly(2,3,4,5,6-pentafluorostyrene).

4. Process according to any one of the preceding claims, wherein said PPFS-type polymer has a number-average molar mass Mₙ, determined by size exclusion chromatography, of greater than or equal to 10 000 g.mol⁻¹, in particular of between 10 000 g.mol⁻¹ and 1 000 000 g.mol⁻¹, in particular between 40 000 g.mol⁻¹ and 600 000 g.mol⁻¹, more particularly of between 40 000 g.mol⁻¹ and 400 000 g.mol⁻¹.

5. Process according to any one of the preceding claims, wherein said telechelic polycarbonate/polyester is formed from one or more monomers chosen from trimethylene carbonate and ε-caprolactone, and in particular is a poly(trimethylene carbonate) (PTMC) or poly(ε-caprolactone) (PCL) having a free thiol function at one of its ends and at least one hydroxyl function, preferably just one hydroxyl function, at the other of its ends.

6. Process according to any one of the preceding claims, wherein said telechelic polycarbonates/polyesters employed in step (ii) are obtained beforehand in a single step by ring-opening polymerization of said cyclic monomer(s), in the presence of at least one initiator that is a mono- or polyalcohol, in particular monoalcohol, bearing a free thiol function, in particular a mercapto alkanol, for example 6-mercaptohexan-1-ol; and of a catalyst, preferably an organic catalyst and more preferentially chosen from diphenyl phosphate (DPP) and 1,1'-binaphthyl-2,2'-diyl hydrogenphosphate (BNPH).

7. Process according to any one of the preceding claims, wherein said telechelic polycarbonates/polyesters have a polydispersity index, defined as the ratio of the weight-average molar mass Mw to the number-average molar mass Mn, these being determined by size exclusion chromatography, of strictly less than 1.2, preferably of between 1 and 1.1.

8. Process according to any one of the preceding claims, wherein said telechelic polycarbonates/polyesters have a number-average molar mass, determined by ¹H NMR analysis, of strictly greater than 2000 g.mol⁻¹, especially of between 2000 g.mol⁻¹ and 20 000 g.mol⁻¹, in particular of between 2500 g.mol⁻¹ and 10 000 g.mol⁻¹, and more particularly between 3000 g.mol⁻¹ and 7500 g.mol⁻¹.

9. Process according to any one of the preceding claims, wherein said telechelic polycarbonate(s)/polyester(s) and said PPFS-type polymer are employed in step (iii) in a telechelic polymers/monomer units of the PPFS-type polymer molar ratio of between 0.1 and 1.

10. Process according to any one of the preceding claims, further comprising at least one step of purifying the comb polymer obtained at the end of the grafting (iii), said purification step being performed by dissolving the polymer obtained at the end of step (iii) in an organic solvent, for example in dichloromethane (DCM), acetone, tetrahydrofuran (THF), methyl ethyl ketone (MEK), N,N-dimethylformamide (DMF), or mixtures thereof, preferably DCM, and then by precipitating the comb polymer in a mixture of a first solvent chosen from methanol, ethanol, diethyl ether, and mixtures thereof, and of a second solvent chosen from DCM, acetone, THF, MEK, DMF, and mixtures thereof, in particular in an acetone/methanol mixture, followed by liquid/solid separation, for example filtration, and drying.

11. Process according to any one of the preceding claims, further comprising a step of protecting the hydroxyl functions present at the ends of the polycarbonate/polyester side chains of said comb polymer, by reaction with at least one compound, referred to as protecting agent, chosen from acyl chlorides, acid anhydrides and isocyanates.

12. Comb polymer, comprising a main chain of PPFS type formed from 1-ethenyl- and/or 1-allyl-2,3,4,5,6-pentafluorobenzene monomers, a portion of the monomer units of the main chain bearing polymeric side chains, referred to as polycarbonate/polyester chains, formed from at least one five- to eight-membered cyclic monomer chosen from lactones and cyclic carbonates; said polymeric side chains being grafted in the para position of the pentafluorophenyl groups via thioether bonds.

13. Comb polymer according to the preceding claim, said polymer being obtained by the process defined according to any one of Claims 1 to 11.

14. Comb polymer according to Claim 12 or 13, having a degree of grafting of side chains, determined by ¹⁹F fluorine nuclear magnetic resonance (NMR), of greater than or equal to 1% and less than or equal to 100%, preferably of between 5% and 90%, in particular of strictly greater than 35%, especially of between 38% and 75%, and more particularly between 40% and 60%.

15. Solid electrolyte, in particular of solid polymer electrolyte (SPE) or hybrid solid electrolyte (HSE) type, comprising, or even being formed of:
- at least one comb polymer as obtained according to the process of any one of Claims 1 to 11 or as defined according to any one of Claims 12 to 14, of which the hydroxyl functions at the ends of the grafted side chains are preferably protected;
- at least one alkali or alkaline earth metal salt, in particular a lithium salt; and
- optionally one or more inorganic fillers.

16. Electrochemical system, in particular an energy storage device, especially a rechargeable battery, in particular a lithium battery, comprising a solid electrolyte, in particular a film of solid electrolyte, as defined in Claim 15.
